# EUROPÄISCHE PATENTSCHRIFT

(11) **EP 4 281 199 B1**
(45) Veröffentlichungstag und Bekanntmachung des Hinweises auf die Patenterteilung: **24.12.2025**
(21) Anmeldenummer: 22702849.5
(22) Anmeldetag: 21.01.2022
(51) Int. Cl.: A63B 67/04, A63B 69/00, A63B 69/38, G06F 3/01, A63B 71/06

(54) **VERFAHREN ZUM TRAINING DER ANTIZIPATION DER FLUGBAHN EINES SPIELOBJEKTES**
METHOD FOR TRAINING THE ANTICIPATION OF THE TRAJECTORY OF A PLAY OBJECT
PROCÉDÉ D'ENTRAÎNEMENT À L'ANTICIPATION DE LA TRAJECTOIRE D'UN OBJET DE JEU

(30) Priorität: 21.01.2021 AT 500312021
(43) Veröffentlichungstag der Anmeldung: 29.11.2023
(73) Patentinhaber: Sensorsport E.U., 8020 Graz (AT)
(72) Erfinder: PROPST, Mario, 8020 Graz (AT)
(74) Vertreter: Wildhack & Jellinek Patentanwälte GmbH
(86) Internationale Anmeldenummer: PCT/AT2022/060016
(87) Internationale Veröffentlichungsnummer: WO 2022/155695

(56) Entgegenhaltungen:
- EP-A1- 3 385 937
- DE-B3- 102015 002 677
- US-A- 4 303 241
- US-B1- 9 956 465

## Beschreibung

Die Erfindung betrifft ein Verfahren zum Training der Antizipation der Flugbahn eines Spielobjekts, insbesondere eines Balls, gemäß Patentanspruch 1, sowie eine Anordnung zur Durchführung des Verfahrens gemäß Patentanspruch 9.

Die Athletik und Technik der Spieler entwickeln sich immer weiter und auch die Geschwindigkeit der geschlagenen Spielobjekte wie Bälle oder Pucks speziell im Spitzensport wird dadurch immer höher. Dies trifft speziell auf verschiedenste Rückschlagsportarten wie z.B. Tennis, Badminton, Tischtennis und Paddel-Tennis, aber auch Volleyball, Fußball, Faustball oder Eishockey zu.

Die geschlagenen Bälle erreichen bei Rückschlagsportarten Geschwindigkeiten von bis zu 200 km/h und mehr. Der Rückschläger hat dadurch immer weniger Zeit sich, zum Ball zu bewegen und seinen Schlag durchzuführen. Bälle werden entweder nicht erreicht bzw. nur unter großer Zeitnot. Dadurch steigt die Fehlerquote. Am augenscheinlichsten wird dies beim Return im Tennis (Asse, Winner). Bei schnellen Aufschlägen von über 200 km/h hat der Returnspieler ca. 0,5 s Zeit, um den Rückschlag anzusetzen.

In dieser Zeit müssen einige kognitive Prozesse abgearbeitet werden:

| | |
|---|---|
| Beobachten | --> Beobachtung der Schlagausführung |
| Erkennen | --> es wird eine Tendenz erkannt |
| Analysieren | --> Das Erkannte wird analysiert |
| Mehrere Optionen | --> Mehrere Optionen möglich |
| Bewerten | --> Bewertung der Optionen |
| Entscheiden | --> Entscheiden welche Option ausgeführt wird |
| Aktion | --> Rückschlag einleiten |

Bei Sportarten wie Tischtennis und Badminton sind diese Zeiten sogar noch kürzer. Hier hat der Rückschläger bei schnell gespielten Bällen auf kurzer Distanz oft nur mehr ca. 0,1-0,2 s Zeit, um den Rückschlag anzusetzen. Bei diesen kurzen Zeiten ist es nur mehr möglich, den geschlagenen Ball zu retournieren, wenn die Richtung des geschlagenen Balles von der Schlagbewegung des Gegners abgeleitet werden kann. Dadurch kann der Spieler die Rückschlagbewegung früher einleiten und hat dadurch mehr Zeit, den Ball zu erreichen und zu returnieren.

Die US 4303241 A offenbart ein Trainingsverfahren bzw. eine Anordnung für einen Baseball-Schlagmann. Um dem Schlagmann zu ermöglichen, die restliche Flugbahn des Balls zu berechnen, muss der erste Teil der Flugbahn des Baseballs für eine gewisse Zeit beobachtet, werden. Nachdem der Ball die Hand des Werfers verlassen hat, wird das Sichtfeld des Schlagmanns durch Schließen eines Visiers verdunkelt. Dies erfolgt durch Betätigen eines am Boden angeordneten Druckschalters, der von dem Werfer ausgelöst wird, sobald der Leitfuß des Werfers beim Wurf auf dem Boden aufkommt.

Die US 9956465 B1 offenbart ebenfalls ein Trainingsverfahren bzw. eine Anordnung für einen Baseball-Schlagmann, bei dem der Ball für eine gewisse Zeit nachdem der Ball die Hand des Werfers verlassen hat, noch gesehen wird, um den restlichen Verlauf der Flugbahn abzuleiten. Anschließend wird das Visier des Schlagmanns angesteuert durch einen Sensor verdunkelt. Beim Sensor handelt es sich um einen Bewegungsmelder, der am Boden an unterschiedlichen Positionen installiert sein kann, sodass er z.B. mit dem Leitfuß des Werfers, dem Arm oder dem Ball im Zuge einer Wurfbewegung ausgelöst wird.

Die Antizipationsfähigkeit der Flugbahn eines Spielobjekts wird aktuell hauptsächlich automatisch durch Training und bewusste Beobachtung der Körperhaltung des Gegners in der jeweiligen Sportart trainiert. So ist z.B. Schattentennis, d.h. ein Tennisspiel ohne Ball, bekannt, bei dem trainiert werden kann, durch Beobachtung der Schlagbewegung zu erkennen, wohin der Ball gespielt wird. Ähnliches ist aus dem Fußball, Handball oder Eishockey bekannt, wo z.B. beim Tormanntraining leichte Bälle aus kurzer Distanz mit Schläger, Hand oder Fuß gespielt werden. Der zu trainierende Torhüter muss anschließend erkennen, wohin die Bälle gespielt werden und diese abwehren. Diese Trainingsverfahren sind jedoch nicht universell einsetzbar, zeigen erst nach langer Trainingsdauer Effekte beim trainierenden Spieler und die Antizipationsfähigkeit wird meist nicht optimal trainiert.

Aufgabe der Erfindung ist es daher, diesbezüglich Abhilfe zu schaffen und ein Trainingsverfahren bzw. eine Trainingsanordnung zur Verfügung zu stellen, die bei Spielern verschiedenster Sportarten und Mannschaftsgröße einsetzbar sind und die Antizipationsfähigkeit der Flugbahn eines Spielobjekts rasch und effizient trainieren.

Die Erfindung löst diese Aufgabe mit einem Verfahren zum Training der Antizipation der Flugbahn eines Spielobjekts, insbesondere eines Balls, für zumindest zwei Spieler, mit den Merkmalen von Patentanspruch 1.

Unter Spielobjekten werden im Folgenden jegliche Objekte verstanden, die bei der Ausübung eines Sports von einer Person, die den jeweiligen Sport ausübt, beispielsweise mit dem Fuß, der Hand, dem Kopf oder einem sonstigen Körperteil oder einem Sportgerät wie einem Schläger bzw. Racket gespielt bzw. auf eine Flugbahn gebracht werden können. Nach dem letzten Kontakt mit dem Spielobjekt im Rahmen der Ausführungsbewegung, d.h. nachdem das Spielobjekt im Rahmen der Ausführungsbewegung zuletzt Kontakt mit beispielsweise einem Racket einer Vorrichtung zur Anordnung am Körper eines Spielers, oder einem Körperteil eines Spielers wie z.B. einem Fuß des, das Spielobjekt spielenden, ersten Fußballspielers hatte, ist das Spielobjekt für den zu trainierenden zweiten Spieler für einen vorgegebenen Verdunkelungszeitraum nicht sichtbar.

Unter einer Ausführungsbewegung wird im Zusammenhang mit der Erfindung jede Bewegung verstanden, mit der ein Spielobjekt gespielt bzw. auf seine Flugbahn gebracht wird. Dabei kann z.B. ein Körperteil eines Spielers zum Einsatz kommen, um das Spielobjekt auf seine Flugbahn zu bringen, wie dies beispielsweise beim Fußball oder Volleyball der Fall ist. Es kann jedoch auch ein Schlaggerät zum Einsatz kommen, um das Spielobjekt auf seine Flugbahn zu bringen, wie z.B. ein Tennisracket um einen Tennisball zu spielen oder ein Eishockeyschläger, um einen Puck zu spielen. Im Zuge einer derartigen Ausführungsbewegung kann z.B. ein Schlaggerät eine Fülle von charakteristischen Positionen wie z.B. einen Umkehrpunkt, einen tiefsten Punkt oder einen Treffpunkt mit dem Spielobjekt einnehmen, die genutzt werden können, um die Ausführungsbewegung zu detektieren. Zusätzlich oder alternativ dazu ist es auch möglich, die Ausführungsbewegung vom Spielobjekt aus zu detektieren, z.B. in Form eines Treffpunkts, d.h. eines Auftreffens z.B. eines Schlaggeräts oder Körperteils eines Spielers auf dem Spielobjekt.

Unter einem Schlaggerät werden im Zusammenhang mit der Erfindung jegliche Sportgeräte verstanden, die dazu geeignet sind, ein Spielobjekt im Rahmen einer Ausführungsbewegung auf eine Flugbahn zu bringen, wie beispielsweise Rackets, z.B. Tennisrackets, Badmintonrackets oder Tischtennisschläger, oder auch Schläger, wie z.B. Eishockeyschläger.

Durch Training mit einem erfindungsgemäßen Verfahren kann ein Sportler vorteilhafterweise die Antizipationsfähigkeit besonders effizient trainieren und innerhalb kürzester Zeit, z.B. innerhalb weniger Wochen, entwickeln. Dadurch erreichen Spieler, dass sie um einen Bruchteil einer Sekunde früher erkennen können, wohin das Spielobjekt gespielt wird und sich früher zum Spielobjekt bewegen können, um das Spielobjekt zu erreichen. Dadurch sinken die Fehlerquote und das Spielniveau steigt.

Der erste Spieler spielt ein Spielobjekt zu dem zu trainierenden zweiten Spieler der eine Verdunkelungsbrille trägt. Unter einer Verdunkelungsbrille werden im Zusammenhang mit der Erfindung alle Brillen verstanden, deren Gläser zumindest teilweise intransparent oder transparent geschaltet werden können, wie beispielsweise Shutter-Brillen, oder Virtual-Reality-Brillen. Unter "intransparent schalten" wird im Zusammenhang mit der Erfindung verstanden, dass in intransparentem Zustand der Verdunkelungsbrille der Träger der Verdunkelungsbrille seine gesamte Umgebung in Blickrichtung und/oder vorgegebene Objekte, wie z.B. das Spielobjekt, nicht unmittelbar sehen kann.

Unter einer Virtual-Reality-Brille wird im Zusammenhang mit der Erfindung jegliche Brille verstanden, die es ermöglicht, für eine Person, d.h. für den Träger der Virtual-Reality-Brille, zeitweise eine physische Umgebung und zeitweise zumindest teilweise eine z.B. computergenerierte, virtuelle Umgebung darzustellen bzw. sichtbar zu machen. Im Zusammenhang mit der Erfindung wird unter einer Virtual-Reality-Brille auch eine Brille verstanden, mit welcher der Athlet die Umgebung real wahrnimmt, jedoch ein Teil oder auch das ganze Sichtfeld mit einem virtuellen Bild ersetzt werden kann. Diese vermischte Darstellung einer physischen und einer virtuellen Umgebung wird häufig als Augmented-Reality-Brille oder Mixed-Reality-Brille bezeichnet. Im Zusammenhang mit der Erfindung wird daher auch ein Head-Mounted-Display, das eine der oben angeführten Funktionalitäten aufweist, als eine Virtual-Reality-Brille betrachtet.

Die Verdunkelungsbrille intransparent zu schalten, ermöglicht es, das vom ersten Spieler gespielte Spielobjekt ab einem vorgegebenen Zeitpunkt auszublenden. Ist die Verdunkelungsbrille intransparent geschaltet, muss der zweite Spieler versuchen, die Flugbahn des Spielobjekts vorherzusehen, um sich zum Spielobjekts zu bewegen, sich richtig zu positionieren und den Rückschlag des Spielobjekts einzuleiten. Da der zweite Spieler durch Beobachtung der Ausführungsbewegung, die insbesondere die Bewegungen des ersten Spielers und dessen Racket umfasst, erahnen muss, wohin das Spielobjekt gespielt wird, wird durch dieses Trainingsverfahren die Antizipationsfähigkeit optimal geschult.

Um zu ermöglichen, dass mehrere Spieler gleichzeitig trainiert werden können, sodass deren Antizipationsfähigkeit optimiert werden kann, kann vorgesehen sein,
- dass der erste Spieler und der zweite Spieler jeweils eine Verdunkelungsbrille, insbesondere eine Shutter-Brille oder Virtual-Reality-Brille, tragen,
- dass beim ersten Spieler und beim zweiten Spieler jeweils Ausführungsbewegungen detektiert werden, und
- dass bei Detektion einer Ausführungsbewegung die Verdunkelungsbrille, insbesondere eine Shutter-Brille oder Virtual-Reality-Brille, des ersten Spielers und die Verdunkelungsbrille, insbesondere eine Shutter-Brille oder Virtual-Reality-Brille, des zweiten Spielers jeweils wechselseitig intransparent geschaltet werden.

Um gleichzeitig die Antizipationsfähigkeit der Spieler zweier Mannschaften, beispielsweise die Spieler der beiden Teams beim Tennis-Doppel oder die Spieler zweier Fußballmannschaften, trainieren zu können, kann vorgesehen sein,
- dass zwei Teams mit jeweils mehreren Spielern vorgesehen sind und alle Spieler des ersten Teams und alle Spieler des zweiten Teams jeweils eine Verdunkelungsbrille, insbesondere eine Shutter-Brille oder Virtual-Reality-Brille, tragen,
- dass bei allen Spielern jeweils Ausführungsbewegungen detektiert werden, und
- dass bei Detektion einer Ausführungsbewegung
   - die Verdunkelungsbrille, insbesondere die Shutter-Brillen oder Virtual-Reality-Brillen, der Spieler des ersten Teams und die Verdunkelungsbrillen, insbesondere die Shutter-Brillen oder Virtual-Reality-Brillen, der Spieler des zweiten Teams jeweils wechselseitig intransparent geschaltet werden oder
   - die Verdunkelungsbrillen, insbesondere die Shutter-Brillen oder Virtual-Reality-Brillen, aller Spieler außer der Verdunkelungsbrille, insbesondere der Shutter-Brille oder Virtual-Reality-Brille, desjenigen Spielers, der die Ausführungsbewegung durchführt, intransparent geschalten werden.

Um ein besonders effizientes Training der Antizipationsfähigkeit zu gewährleisten, kann bei einem erfindungsgemäßen Verfahren vorgesehen sein,
- dass nur eine Brillenseite der Verdunkelungsbrille, insbesondere eine Shutter-Brille oder Virtual-Reality-Brille, intransparent geschaltet wird und/oder
- dass die rechte und die linke Brillenseite abwechselnd intransparent geschaltet werden und/oder
- dass die rechte und/oder die linke Brillenseite mit einer vorgegebenen Frequenz, insbesondere in Form von Blinken, transparent und wieder intransparent geschaltet wird.

Durch beidäugiges Sehen haben Menschen ein räumliches Sehen, eine höhere Sehschärfe und ein breiteres Gesichtsfeld. Wird nur eine Seite der Verdunkelungsbrille, insbesondere eine Shutter-Brille oder Virtual-Reality-Brille, verschlossen, werden das räumliche Sehen, die Sehschärfe und das Gesichtsfeld eingeschränkt. Der zweite Spieler lernt trotz dieser Einschränkung wieder nahezu an die Spitzenleistung (speziell seiner Antizipationsfähigkeit) zu kommen und trainiert somit die Antizipationsfähigkeit mit nur einem Auge, aber auch weitere kognitive Fähigkeiten.

Des Weiteren haben Menschen ein dominantes Auge und ein Hilfsauge. Wird z.B. das dominante Auge intransparent geschalten lernt der zu trainierende Sportler mit dem Hilfsauge wieder nahezu an die Spitzenleistung (speziell seiner Antizipationsfähigkeit) zu kommen und trainiert somit die Antizipationsfähigkeit nur mit dem unterdrückten Auge aber auch weitere kognitive Fähigkeiten.

Eine besonders effiziente Detektion der Ausführungsbewegung und dementsprechende Verdunkelung der Verdunkelungsbrille, insbesondere eine Shutter-Brille oder Virtual-Reality-Brille, wird bei einem erfindungsgemäßen Verfahren dadurch gewährleistet, dass der Kontakt mit dem Spielobjekt während der Ausführungsbewegung detektiert wird und dass die Verdunkelungsbrille, insbesondere die Shutter-Brille oder Virtual-Reality-Brille, jeweils aufgrund des detektierten Kontakts mit dem Spielobjekt intransparent geschaltet wird.

Eine solche Vorgehensweise ist besonders vorteilhaft, da der Treffpunkt bzw. der Kontakt mit dem Spielobjekt besonders einfach und zuverlässig zu detektieren ist, sodass auch ein besonders zuverlässiges Steuersignal für die Verdunkelungsbrille, insbesondere eine Shutter-Brille oder Virtual-Reality-Brille, erstellt werden kann. Zusätzlich stellt der Treffpunkt auch eine klare Grenze zwischen der Phase der Ausführungsbewegung in der ein Spieler die Schlagrichtung noch gewollt verändern kann und der Ausschwungphase, in der der ausführende Spieler keinen Einfluss mehr auf die Flugbahn des Spielobjekts nehmen kann, dar. Diese Technik ist universell für jegliche Sportarten aber auch unterschiedlichsten Spielstilen oder Schlagarten anwendbar.

Um ein erfindungsgemäßes Verfahren auch an z.B. die individuelle Erfahrung des zu trainierenden Spielers anpassen zu können, kann vorgesehen sein, dass die Verdunkelungsbrille, insbesondere eine Shutter-Brille oder Virtual-Reality-Brille unmittelbar nach, vorzugsweise 4 bis 9 ms nach, besonders vorzugsweise 5 ms nach, dem detektierten Kontakt mit dem Spielobjekt intransparent geschaltet wird.

Da es für einen zu trainierenden Spieler, der noch wenig Spielerfahrung besitzt und wenig Trainingszeit absolviert hat, und dadurch noch eine geringere Antizipationsfähigkeit aufweist, schwierig ist, wenn die Verdunkelungsbrille, insbesondere eine Shutter-Brille oder Virtual-Reality-Brille, bereits zum Zeitpunkt des Treffpunktes intransparent geschalten wird, stellt es eine Erleichterung dar, wenn eine derartige Verzögerungszeit eingestellt werden kann. Ein derartig skalierbarer Schwierigkeitsgrad durch einstellbare Verzögerungszeiten fördert ein schnelles Erlernen bzw. abhängig von der bereits erworbenen Antizipationsfähigkeit einen angepassten Schwierigkeitsgrad des Antizipations-Trainings und ist somit auch für Anfänger bis zum Profisportler optimal anwendbar.

Eine weitere Verbesserung des Trainingseffekts angepasst an die Geschwindigkeit, mit der das Spielobjekt gespielt wird, oder an die Distanz zum ersten Spieler, kann erzielt werden,
- dass die Geschwindigkeit des Spielobjekts nachdem es auf seine Flugbahn gebracht wurde, insbesondere die Geschwindigkeit des nach dem Kontakt mit einem Schlaggerät, insbesondere einem Racket oder Schläger, ermittelt wird, und dass die Dauer des Zeitraums, in dem die Verdunkelungsbrille intransparent geschaltet ist, sich insbesondere automatisch, in Abhängigkeit von der ermittelten Geschwindigkeit des Spielobjekts gewählt wird und/oder
- dass die Distanz zwischen dem ersten Spieler und dem zweiten Spieler ermittelt wird und dass die Dauer des Zeitraums, in dem die Verdunkelungsbrille intransparent geschaltet ist, insbesondere automatisch, in Abhängigkeit von der ermittelten Distanz gewählt wird.

Der "Zeitraum, in dem die Verdunkelungsbrille intransparent geschaltet ist", wird im Zusammenhang mit der Erfindung synonym mit dem Begriff "Verdunkelungszeitraum" verwendet.

Beispielsweise ist es beim Tennis für einen optimalen Trainingseffekt vorteilhaft, wenn die Verdunkelungsbrille, insbesondere eine Shutter-Brille oder Virtual-Reality-Brille, immer öffnet, wenn das Spielobjekt z.B. das Netz passiert. Bei schnell gespielten Bällen ist somit eine kürzere Verschlusszeit und bei langsam gespielten Bällen eine längere Verschlusszeit vorteilhaft. Durch dieses Verfahren kann erreicht werden, dass der Trainingseffekt sowohl bei schnellen als auch bei langsam geschlagenen Bällen maximiert werden kann.

Diese Funktion kann auch für mehrere Spieler z.B. im Doppel oder Mannschaftssportarten angewandt werden. Bei jedem Spieler würde z.B. abhängig von der Distanz zu demjenigen Spieler, der gerade den Ball spielt, eine distanz- und/oder geschwindigkeitsabhängige Verschlusszeit für die Verdunkelungsbrille gewählt werden, die für den jeweiligen Spieler optimal ist.

Eine weitere Verbesserung des Trainings kann erzielt werden, wenn die Dauer des Zeitraums, in dem die Verdunkelungsbrille, insbesondere die Shutter-Brille oder Virtual-Reality-Brille, intransparent geschaltet ist, 50 ms bis 3 s, insbesondere 50 ms bis 1 s, vorzugsweise 50 ms bis 300 ms, beträgt.

Um bei einem erfindungsgemäßen Verfahren sicherzustellen, dass der zweite Spieler vorteilhafterweise die gesamte Flugbahn des Spielobjekts bis zum Kontakt mit dem Spielobjekt zu antizipieren lernt, kann vorgesehen sein, dass die Verdunkelungsbrille spätestens, wenn eine Ausführungsbewegung des zweiten Spielers detektiert wird, wieder transparent geschaltet wird.

Gemäß einer vorteilhaften Variante kann hierbei vorgesehen sein, dass die Verdunkelungsbrille transparent geschaltet wird,
- nachdem der zweite Spieler das Spielobjekt getroffen hat, vorzugsweise nachdem das Spielobjekt von einem Schlaggerät, insbesondere einem Racket oder Schläger, des zweiten Spielers getroffen wurde, und/oder
- wenn das Schlaggerät, insbesondere das Racket oder der Schläger, des zweiten Spielers im Zuge der Ausführungsbewegung einen Umkehrpunkt überschreitet.

Bei einer perfekten Antizipation könnte ein Athlet die Flugbahn, Geschwindigkeit, Länge und Höhe des geschlagenen Balles so gut antizipieren, dass er den Ball sogar mit geschlossener Verdunkelungsbrille, insbesondere eine Shutter-Brille oder Virtual-Reality-Brille, noch treffen könnte. Dies ist eine besonders schwierige Trainingsform, da der zu trainierende Spieler die Geschwindigkeit, Richtung, Länge und Absprunghöhe des Spielobjekts berechnen muss und letzten Endes auch die Schlagdurchführung noch mit geschlossener Brille durchzuführen ist.

Eine besonders zuverlässige Detektion der Ausführungsbewegung kann erzielt werden, wenn die Detektion der Ausführungsbewegung und/oder des Kontakts mit dem Spielobjekt mittels eines Beschleunigungssensors vorgenommen wird.

Eine weitere Verbesserung der Zuverlässigkeit der Detektion der Ausführungsbewegung kann gewährleistet werden, wenn die Detektion der Ausführungsbewegung und/oder des Kontakts mit dem Spielobjekt mittels zumindest einen Lagesensors, insbesondere eines Gyroskopsensors und/oder eines Magnetfeldsensors, vorgenommen wird.

Eine besonders zuverlässige Detektion der Ausführungsbewegung und/oder des Kontakts mit dem Spielobjekt kann gewährleistet werden, wenn die Messwerte eines Beschleunigungssensors, eines Gyroskopsensors und eines Magnetfeldsensors gemeinsam, d.h. in kombinierter Form, für die Detektion der Ausführungsbewegung und/oder des Kontakts mit dem Spielobjekt herangezogen werden.

Unter einem Magnetfeldsensor bzw. Magnetometer wird im Zusammenhang mit der Erfindung eine sensorische Einrichtung zur Messung der magnetischen Flussdichte (Einheit Tesla (T)) bzw. Ausrichtung des Erdmagnetfeldes für alle drei Raumrichtungen (x,y,z) verstanden. Ein solcher Sensor kann beispielsweise dazu eingesetzt werden, die Lage und Positionserkennung eines Rackets meist in Kombination mit einem Beschleunigungssensors und/oder Gyroskopsensor zu ermitteln.

Unter einem Beschleunigungssensor wird im Zusammenhang mit der Erfindung ein, vorzugweise digitaler linearer, 3D-Beschleunigungssensor verstanden, der Beschleunigungen in der Einheit m/s² in allen drei Raumrichtungen (x,y,z) misst. Ein derartiger Sensor kann beispielsweise dazu eingesetzt werden, zu erkennen, ob eine Geschwindigkeitszu- oder abnahme stattfindet und er kann auch in Kombination mit z.B. einem Gyroskopsensor und/oder einem Magnetometer eingesetzt werden, um die Lage und Position eines Rackets zu ermitteln.

Unter einem Gyroskopsensor wird im Zusammenhang mit der Erfindung ein 3D digitaler Drehratensensor (engl. 3D digital angular rate sensor) verstanden, der den Winkel eines Objekts im Bezug zur Schwerkraft in allen drei Raumrichtungen (x,y,z) bzw. die Winkelgeschwindigkeit in Grad pro Sekunde (°/s) misst. Ein derartiger Sensor kann in Kombination mit z.B. einem Beschleunigungssensor und/oder einem Magnetometer eingesetzt werden, um die Lage und Position eines Rackets zu ermitteln.

Ein besonders effektiver Einsatz eines erfindungsgemäßen Verfahrens bei Racketsportarten kann gewährleistet werden, wenn die Ausführungsbewegung mit einem Schlaggerät, insbesondere einem Racket, vorzugsweise einem Tennisracket oder Badmintonracket oder Tischtennisschläger, oder einem Schläger, vorzugsweise einem Eishockeyschläger, durchgeführt wird und dass die Verdunkelungsbrille, insbesondere eine Shutter-Brille oder Virtual-Reality-Brille, intransparent geschaltet wird,
- wenn die im Zuge der Ausführungsbewegung, insbesondere beim Kontakt des Schlaggeräts, insbesondere des Rackets oder Schlägers, mit dem Spielobjekt, gemessene Beschleunigung des Schlaggeräts, insbesondere des Rackets oder Schlägers, einen vorgegebenen Beschleunigungsschwellenwert, insbesondere von 120 m/s², übersteigt und/oder
- wenn das Schlaggerät, insbesondere das Racket oder der Schläger, im Zuge der Ausführungsbewegung eine vorgegebene Lage erreicht, insbesondere wenn das Schlaggerät, insbesondere das Racket oder der Schläger, einen Umkehrpunkt überschreitet und/oder
- wenn die, insbesondere berechnete, Schlägerkopfgeschwindigkeit des Schlaggeräts, insbesondere des Rackets oder Schlägers, einen vorgegebenen Geschwindigkeitsschwellenwert, insbesondere von 20 m/s, übersteigt, und/oder
- wenn die im Zuge der Ausführungsbewegung beim Kontakt des Schlaggeräts, insbesondere des Rackets oder Schlägers, mit dem Spielobjekt auftretenden Vibrationen einen vorgegebenen Schwellenwert überschreiten und/oder
- wenn die Ableitung nach der Zeit der beim Kontakt des Schlaggeräts, insbesondere des Rackets oder Schlägers, mit dem Spielobjekt am Treffpunkt gemessenen Beschleunigung des Schlaggeräts, insbesondere des Rackets oder Schlägers, einen vorgegebenen Schwellenwert, insbesondere von 2000, überschreitet.

Eine alternative Variante, die Verdunkelungsbrille intransparent zu schalten, kann bereitgestellt werden, wenn bei Detektion der Ausführungsbewegung die Verdunkelungsbrille für eine bestimmte Zeit derart intransparent geschaltet wird, dass das Spielobjekt nach dem letzten Kontakt mit dem Spielobjekt im Rahmen der Ausführungsbewegung für den zweiten Spieler durch ein virtuelles Bild ersetzt wird.

Aufgabe der Erfindung ist es zudem, eine Anordnung bereitzustellen, mit der das erfindungsgemäße Verfahren durchgeführt werden kann, die bei Spielern verschiedenster Sportarten und Mannschaftsgröße einsetzbar ist und es ermöglicht, die Antizipationsfähigkeit der Flugbahn eines Spielobjekts rasch und effizient zu trainieren.

Diese Aufgabe wird durch eine Anordnung mit den Merkmalen des Anspruchs 9 gelöst.

Eine derartige erfindungsgemäße Anordnung macht ein besonders effektives Training der Antizipationsfähigkeit möglich und ist vorteilhafterweise bei verschiedensten Sportarten anwendbar, wie z.B. im Tennis, Tischtennis, Badminton, Volleyball, Fußball usw. Darüber hinaus ist eine erfindungsgemäße Anordnung einfach sportartspezifisch adaptierbar und skalierbar für verschiedenste Spielerniveaus von Anfänger bis Profisport.

Eine alternative Variante einer Intransparent-Schaltung kann bei einer erfindungsgemäßen Anordnung bereitgestellt werden, wenn
- die Anordnung eine Verdunkelungsbrille in Form einer Virtual-Reality-Brille umfasst, die dazu ausgebildet ist, bei Vorliegen eines Steuersignals transparent oder intransparent zu schalten, und
- die zumindest eine Steuereinheit, oder gegebenenfalls eine weitere Steuereinheit, dazu ausgebildet ist, bei Vorliegen eines entsprechenden Steuersignals die Verdunkelungsbrille derart intransparent zuschalten, dass das Spielobjekt nach dem letzten Kontakt mit dem Spielobjekt im Rahmen der Ausführungsbewegung durch ein virtuelles Bild ersetzt wird, insbesondere nach dem letzten Kontakt des Spielobjekts mit einem Schlaggerät, insbesondere einem Racket oder Schläger, oder einer Vorrichtung zur Anordnung am Körper eines Spielers, oder einem Körperteil eines Spielers.

Um Komponenten einer erfindungsgemäßen Anordnung vorteilhafterweise nachträglich an z.B. einem Racket anordnen zu können, können diese teilweise in einer Sendeeinheit zusammengefasst sein. Eine derartige Sendeeinheit für eine erfindungsgemäße Anordnung zur Anordnung an einem Schlaggerät, insbesondere einem Racket, vorzugsweise einem Tennisracket, einem Badmintonracket oder einem Tischtennisschläger, oder einem Schläger, vorzugsweise einem Eishockeyschläger, oder an einer Vorrichtung zur Anordnung am Körper eines Spielers, insbesondere einem Fußballschuh oder einer Manschette, oder in oder an einem Spielobjekt, insbesondere einem Ball, umfasst dabei folgende Komponenten:
- zumindest einen Sensor zur Erfassung einer Ausführungsbewegung und Erstellung eines diesbezüglichen Detektionssignals,
- eine Steuereinheit, die dazu ausgebildet ist, die Detektionssignale des Sensors zu empfangen und basierend auf den Detektionssignalen ein Steuersignal für eine Verdunkelungsbrille, insbesondere eine Shutter-Brille oder Virtual-Reality-Brille, zu erstellen und
- eine Sendevorrichtung, die dazu ausgebildet ist, die von der Steuereinheit erstellten Steuersignale, insbesondere mittels Funk, zu übertragen.

Eine derartige Sendeeinheit weist vorteilhafterweise einen besonders kompakten Aufbau und geringes Gewicht auf, sodass sie einfach an allen Rackets bzw. mit Hilfen von z.B. Manschetten an Händen oder Füssen von Sportlern befestigt werden kann. Durch die in der Sendeeinheit integrierte Steuereinheit, ist eine besonders rasche und zuverlässige Detektion von Ausführungsbewegungen und eine besonders schnelle Übertragung von Steuersignalen möglich.

Eine besonders zuverlässige Detektion der Ausführungsbewegung kann bei einer erfindungsgemäßen Anordnung erzielt werden, wenn der Sensor als Beschleunigungssensor ausgebildet ist.

Eine weitere Verbesserung der Zuverlässigkeit der Detektion der Ausführungsbewegung kann gewährleistet werden, wenn der Sensor als Lagesensor, insbesondere als Magnetfeldsensor und/oder Gyroskopsensor, ausgebildet ist oder dass ein weiterer als Lagesensor ausgebildeter Sensor am Racket angeordnet ist.

Eine besonders vorteilhafte Anbringung der Sendeeinheit oder des Sensors einer erfindungsgemäßen Anordnung kann erzielt werden, wenn der Beschleunigungssensor am Griff des Schlaggeräts, insbesondere des Rackets oder Schlägers, vorzugsweise im Bereich des Griffendes des Schlaggeräts, insbesondere des Rackets oder Schlägers, angeordnet ist.

Auf diese Weise ist es möglich, die Sendeeinheit bzw. den Beschleunigungssensor geschützt z.B. im Inneren des Griffes anzubringen. Das Griffende bzw. das Innere des Griffendes ist auch ein optimaler Bereich, um ein kleines Zusatzgewicht anzubringen, ohne die Performance bzw. die Spieleigenschaft des Schlägers wesentlich zu beeinträchtigen.

Um Komponenten einer erfindungsgemäßen Anordnung vorteilhafterweise besonders kompakt an einem Racket anordnen zu können, können diese teilweise in einer Empfangseinheit zusammengefasst sein. Eine derartige Empfangseinheit für eine erfindungsgemäße Anordnung zur Anordnung an einer Verdunkelungsbrille, insbesondere eine Shutter-Brille oder Virtual-Reality-Brille, umfasst dabei folgende Komponenten:
- eine Empfangsvorrichtung, die dazu ausgebildet ist, an die Verdunkelungsbrille, insbesondere eine Shutter-Brille oder Virtual-Reality-Brille, übermittelte Steuersignale zu empfangen, und
- eine weitere Steuereinheit, die dazu ausgebildet ist, basierend auf den von der Empfangsvorrichtung empfangenen Steuersignalen an der Verdunkelungsbrille, insbesondere eine Shutter-Brille oder Virtual-Reality-Brille, anzusteuern, transparent oder intransparent zu schalten.

Eine derartige Empfangseinheit weist vorteilhafterweise einen besonders kompakten Aufbau und geringes Gewicht auf, sodass sie problemlos im Rahmen oder Bügel einer Verdunkelungsbrille, insbesondere eine Shutter-Brille oder Virtual-Reality-Brille, untergebracht werden kann. Durch die in der Empfangseinheit integrierte weitere Steuereinheit, ist eine besonders rasche und zuverlässige Ansteuerung der Brillengläser möglich, um diese intransparent zu schalten.

Eine weitere Verbesserung des Trainingseffekts angepasst an die Geschwindigkeit, mit der das Spielobjekt gespielt wird, oder an die Distanz zum ersten Spieler, kann erzielt werden, wenn die weitere Steuereinheit der Empfangseinheit dazu ausgebildet ist,
- die Dauer des Zeitraums, in dem die Verdunkelungsbrille intransparent geschaltet ist, in Abhängigkeit von der Geschwindigkeit des Spielobjekts nachdem es auf seine Flugbahn gebracht wurde, insbesondere die Geschwindigkeit des Spielobjekts nach dem Kontakt mit einem Schlaggerät, insbesondere einem Racket oder Schläger, vorzugeben und/oder
- die Dauer des Zeitraums, in dem die Verdunkelungsbrille intransparent geschaltet ist, in Abhängigkeit von der Distanz zwischen dem ersten Spieler und dem zweiten Spieler vorzugeben.

In diesem Zusammenhang kann beispielsweise die Steuereinheit der Anordnung bzw. der Sendeeinheit dazu ausgebildet sein, die Geschwindigkeit des Spielobjekts nachdem es auf seine Flugbahn gebracht wurde, insbesondere die Geschwindigkeit des Spielobjekts nach dem Kontakt mit einem Racket, basierend auf den Messwerten eines Beschleunigungssensors oder auch durch die Kombination mit einem Lagesensor wie einem Gyroskopsensor zu ermitteln.

Vorteilhafterweise kann eine erfindungsgemäße Anordnung bzw. eine erfindungsgemäße Sende- und/oder Empfangseinheit auch in Datenkommunikation mit einem Smartphone stehen, auf dem eine Software in Form eines Apps installiert ist, um mittels des Smartphones Parameter vorgeben zu können, oder verschiedene Vorgaben oder Einstellungen auswählen zu können.

Weitere Vorteile und Ausgestaltungen der Erfindung ergeben sich aus der Beschreibung und den beiliegenden Zeichnungen.

Die Erfindung ist im Folgenden anhand von besonders vorteilhaften, aber nicht einschränkend zu verstehenden Ausführungsbeispielen in den Zeichnungen schematisch dargestellt und wird unter Bezugnahme auf die Zeichnungen beispielhaft beschrieben.

Im Folgenden zeigen schematisch:
Fig. 1 eine Darstellung der Schlagphasen bzw. physikalisch klar definierbarer Punkte und Phasen einer Schlagdurchführung beim Tennis,
Fig. 2 ein erstes Ausführungsbeispiel eines erfindungsgemäßen Trainingsverfahrens,
Fig. 3 eine weitere Darstellung der Schlagphasen beim Tennis,
Fig. 4 die Geschwindigkeit und Beschleunigung des Schlägerkopfes eines Tennisrackets im Zuge einer Ausführungsbewegung,
Fig. 5 ein Ausführungsbeispiel einer erfindungsgemäßen Anordnung,
Fig. 6 ein Ausführungsbeispiel eines kombinierten Sensors zur Detektion der Ausführungsbewegung,
Fig. 7 Vom Beschleunigungssensor gemessene Vibrationen (y-Achse) während und nach dem Auftreffen des Spielobjekts am Racket,
Fig. 8 die Beschleunigung und Vibrationen eines Tennisrackets sowie die Ableitung der Beschleunigung während und nach dem Auftreffen des Spielobjekts,
Fig. 9 die Beschleunigung eines Tennisrackets sowie die Ableitung der Beschleunigung während und nach dem Auftreffen des Spielobjekts mit einem Schwellenwert für die Ableitung der Beschleunigung zur Erkennung des Aufpralls des Spielobjekts am Racket,
Fig. 10 eine schematische Darstellung einer Überblendung des Spielobjekts,
Fig. 11 eine schematische Darstellung der Ansteuerung des Displays einer Virtual-Reality-Brille,
Fig. 12a-Fig. 12c weitere Beispiele für eine Überblendung des Spielobjekts.
Fig. 13 zeigt eine Ausführungsform am Beispiel Tennis

Durch die hohen Geschwindigkeiten der geschlagenen Spielobjekte 6 ist es in verschiedensten Sportarten wünschenswert, die Antizipationsfähigkeit der jeweiligen Sportler so gut wie möglich zu entwickeln bzw. zu trainieren. Selbst bei Profisportlern sind hier oft große Unterschiede erkennbar. Dadurch, dass der Sportler ständig das geschlagene Spielobjekt 6 verfolgt, reagiert der Sportler auch auf dieses. Bei hohen Schlaggeschwindigkeiten ist es allerdings notwendig, nicht das Spielobjekt 6, sondern den Gegner bei der Schlagausführung genauestens zu beobachten, um die Schlagrichtung des Spielobjekts 6 antizipieren und damit die Einleitung des Rückschlags frühzeitig beginnen zu können.

Um die Fähigkeit zu trainieren, den Gegner und nicht das Spielobjekt 6 genauestens zu beobachten, ist es zielführend, das Spielobjekt 6, z.B. den Ball, zum Zeitpunkt des Auftreffens eines Schlägers oder Fußes, mit dem das Spielobjekt 6 vom Gegner in die gewünschte Richtung befördert wird, kurz auszublenden. Bei einem erfindungsgemäßen Verfahren wird dies dadurch erzielt, dass der zu trainierende Spieler 2 eine Verdunkelungsbrille, z.B. eine Shutter-Brille 3 oder eine Virtual-Reality-Brille, trägt.

Dadurch das der zu trainierende Spieler 2 das Spielobjekt 6 ab dem Treffpunkt T für eine kurze Zeit nicht mehr sieht, wird er gezwungen, den Gegner bzw. dessen Bewegungen vor diesem Zeitpunkt des Auftreffens genauestens zu beobachten, um die Richtung aber auch Drall und Länge des geschlagenen Spielobjekts 6 antizipieren und die Rückschlagphase (Positionierung zum Ball und Ausholphase) einleiten zu können, obwohl der zu trainierende Spieler 2 das Spielobjekt 6 nicht sieht.

Im Folgenden wird ein erstes Ausführungsbeispiel eines erfindungsgemäßen Trainingsverfahrens anhand einer Rückschlagsportart mit einem Racket erläutert. Im ersten Ausführungsbeispiel kommt als Verdunkelungsbrille eine Shutter-Brille 3 zum Einsatz. Alle in den folgenden Ausführungsbeispielen im Zusammenhang mit einer Shutter-Brille 3 angeführten Erklärungen sind selbstverständlich auch für andere Arten von Verdunkelungsbrillen wie Virtual-Reality-Brillen gültig.

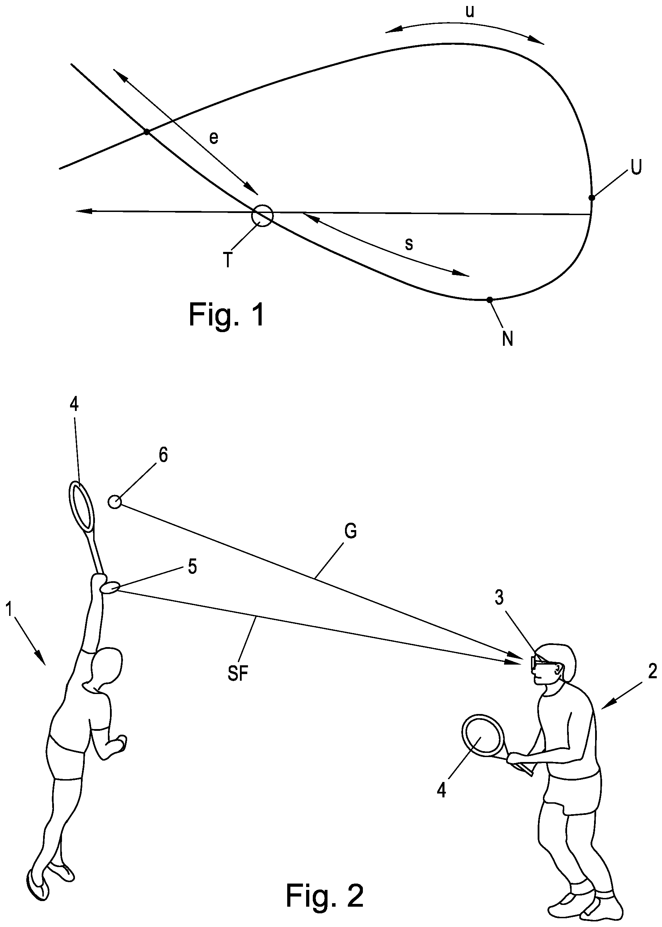

Der Ablauf eines erfindungsgemäßen Verfahrens wird im folgenden Ausführungsbeispiel anhand Fig. 2 am Beispiel eines zu trainierenden Tennisspielers beschrieben. Ein erfindungsgemäßes Verfahren und eine erfindungsgemäße Anordnung 100 sind jedoch selbstverständlich auch für andere Rückschlagsportarten wie Tischtennis oder Badminton, aber auch im Fußball, Eishockey, Handball, aber auch bei Kampfsportarten wie Karate, Boxen, Kickboxen oder dergleichen einsetzbar.

Im Tennis setzt sich ein Schlag aus mehreren Schlagphasen zusammen (siehe Fig. 1):
- Einer Ausholphase u, die das Erreichen der Ausgangsposition, in der im Bewegungsmuster des Tennisschlägers 4 ein Umkehrpunkt U, sowie ein niedrigster Punkt N detektierbar sind,
- einer einleitenden Schlagphase s, in der die Beschleunigung a einen vorgegebenen Schwellenwert x übersteigt,
- einer Schlagphase s, in der der Treffpunkt T, an dem der Tennisschläger 4 den Tennisball trifft,
- sowie einer Ausschwungphase e.

Durch Beobachtung von Kopfhaltung, Beinstellung, Rumpf, Schulter, Schlaghand und Schläger ist es einem Tennisspieler (bei perfekter Antizipation) theoretisch möglich, die Schlagrichtung, aber auch Drall, Höhe und Platzierung zu erkennen. Spätestens zum Zeitpunkt, an dem der Schläger den Ball trifft, d.h. dem Treffpunkt T, kann der Spieler die Schlagrichtung nicht mehr verändern und die Ballflugbahn ist festgelegt. Zu dem Zeitpunkt dieses Auftreffens stehen dem retournierenden Spieler somit alle Informationen zur Verfügung, um Schlagrichtung, Drall, Höhe und Platzierung antizipieren zu können.

Um nun die Antizipation der Flugbahn des Tennisballs mit einem erfindungsgemäßen Verfahren zu trainieren, sind zumindest zwei Spieler, ein erster Spieler 1, der Trainingspartner des zu trainierenden Spielers, und ein zweiter, der zu trainierende, Spieler 2 erforderlich.

Der zu trainierende zweite Spieler 2 trägt eine Shutter-Brille 3, welche transparent oder intransparent schalten kann, wenn z.B. ein entsprechendes Steuersignal vorliegt. D.h. die Shutter-Brille 3 kann das Gesichtsfeld des zweiten Spielers zeitweise verdunkeln, sodass der zweite Spieler 2 in diesem Zeitraum nichts sieht, insbesondere keine Bälle sieht, die vom ersten Spieler 1 gespielt werden.

Der erste Spieler 1 befördert das Spielobjekt 6, im Ausführungsbeispiel einen Tennisball, mittels einer Ausführungsbewegung zum zu trainierenden zweiten Spieler 2. Diese Ausführungsbewegung wird vom ersten Spieler 1 im ersten Ausführungsbeispiel mit Tennisracket 4 durchgeführt.

Um nun den zweiten Spieler 2 effektiv zu trainieren, ist es vorteilhaft, dass der vom Tennisracket 4 abspringende Tennisball nach dem Treffpunkt T nicht mehr sichtbar ist, sodass der zu trainierende zweite Spieler 2 die Flugbahn und -richtung des geschlagenen Tennisballs 6 nicht erkennen kann. Die Ausführungsbewegung des ersten Spielers 1, mit der er den Tennisball auf seine Flugbahn bringt, wird detektiert und aufgrund dieser Detektion wird die Shutter-Brille 3 des zweiten Spielers 2 im Zuge der Ausführungsbewegung für eine bestimmte Zeit intransparent geschaltet.

Der Zeitraum zwischen der Detektion der Ausführungsbewegung bis zur Verdunkelung der Verdunkelungsbrille ist von besonderer Wichtigkeit, damit das Training der Antizipation funktioniert und beeinflusst auch die technischen Voraussetzungen entscheidend.

Bei einem Aufschlag mit 200 km/h würde der Ball in 100 ms bereits 5,6 m zurücklegen und der zweite Spieler 2 würde hier wahrscheinlich durch Beobachtung des Tennisballs noch erkennen können, wohin der Tennisball fliegt, noch bevor die Verdunkelungsbrille verschlossen hat. Eine Zeitspanne von 100 ms zwischen der Detektion der Ausführungsbewegung bis zur Verdunkelung der Verdunkelungsbrille ist daher besonders gut geeignet für ein Training mit langsamen Schlägen z.B. beim Kindertraining.

Der Zeitraum zwischen dem Auftreffen des Tennisballs 6 auf dem Tennisracket 4 und dem Abprallen des Tennisballs vom Tennisracket 4 liegt im Tennis bei ca. 4-6 ms. Daher ist es besonders vorteilhaft, wenn die Verdunkelungsbrille zum Zeitpunkt verdunkelt, an dem der Tennisball auf den Tennisracket 4 aufprallt. Ebenfalls vorteilhaft ist es, wenn die Verdunkelungsbrille schließt, bevor der Tennisball das Tennisracket 4 wieder verlässt - die Ball-Kontaktzeit liegt etwa im Bereich von ~5 ms, also sollte der Zeitraum bis zum Verdunkeln der Verdunkelungsbrille kürzer als 5 ms nach dem Treffpunkt sein. Akzeptabel ist es ebenfalls noch, wenn die Verdunkelungsbrille 5 ms nach dem letzten Kontakt des Tennisballs mit dem Tennisracket 4 verschließt.

Daher ist es vorteilhaft, wenn der Zeitraum zwischen der Detektion der Ausführungsbewegung, z.B. des Kontakts des Tennisballs mit dem Tennisracket 4, bis zur Verdunkelung der Shutter-Brille 3 des zweiten Spielers 2 kürzer als 5 ms ist.

Für die Detektion der Ausführungsbewegung bzw. des Kontakts des Tennisrackets 4 mit dem Tennisball 6 ist im ersten Ausführungsbeispiel ein Beschleunigungssensor 5 auf dem Tennisracket 4 des ersten Spielers 1 angebracht.

Zusätzlich oder alternativ dazu kann bei allen Ausführungsformen eines erfindungsgemäßen Verfahrens bzw. einer erfindungsgemäßen Anordnung 100 die Detektion der Ausführungsbewegung und/oder des Kontakts mit dem Spielobjekt 6 mittels eines Lagesensors wie einem Gyroskopsensor 7 und/oder Magnetometer 8 vorgenommen werden. Zusätzlich oder alternativ ist es auch möglich, dass ein akustischer Sensor wie ein Mikrofon zur Detektion der Ausführungsbewegung bei einer erfindungsgemäßen Anordnung 100 eingesetzt wird. Auf Ausführungsbeispiele einer erfindungsgemäßen Anordnung 100 wird weiter unten noch detaillierter eingegangen.

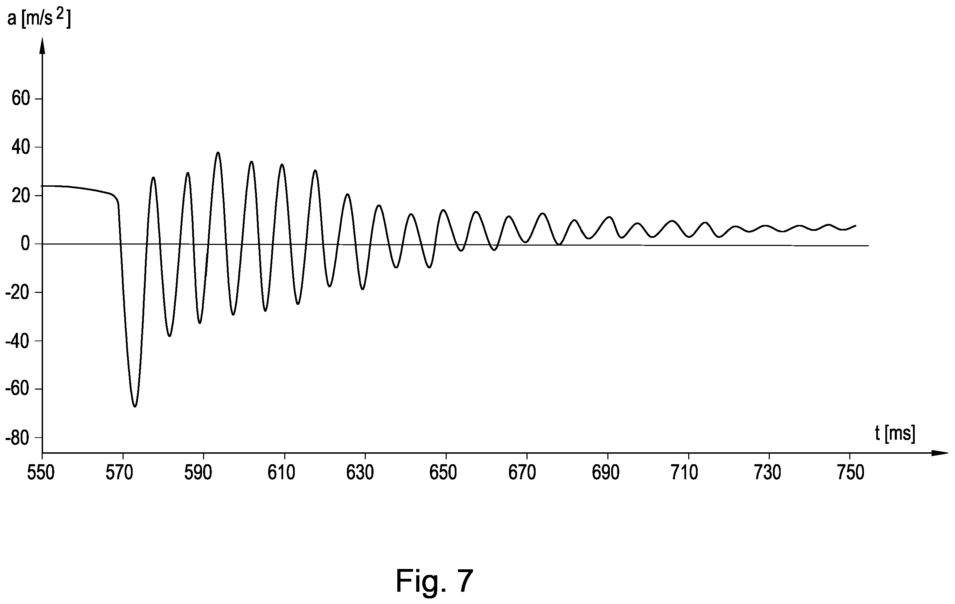

Mittels des Beschleunigungssensors 5 werden zur Detektion der Ausführungsbewegung im ersten Ausführungsbeispiel die am Treffpunkt T (sieh Fig. 7 bis 10), d.h. beim Auftreffen des Tennisrackets 4 auf dem Tennisball, also beim Kontakt mit dem Spielobjekt 6, erzeugten Vibrationen detektiert und so der Zeitpunkt ermittelt, wann der Tennisball auf dem Tennisracket 4 auftrifft. Der Tennisball befindet sich noch am Tennisracket 4 des ersten Spielers 1 bzw. ist gerade dabei, von diesem abzuprallen. Aufgrund dieser Detektion wird ein entsprechendes Steuersignal für die Shutter-Brille 3 des zweiten Spielers 2 erstellt und an die Shutter-Brille 3 übermittelt, sodass diese für eine bestimmte Zeit intransparent schaltet.

Die Detektion der Ausführungsbewegung anhand der am Treffpunkt T, d.h. beim Auftreffen des Tennisrackets 4 auf dem Tennisball erzeugten, Vibrationen bringt eine Reihe von Vorteilen mit sich. Der Treffpunkt T mit dem Tennisball stellt ein für die Sensorik klar erkennbares Ereignis dar und ist unabhängig von der Schlagart, dem Spielstil oder auch Sportart. Außerdem stellt der Treffpunkt T eine klare Grenze zwischen der Phase, in der der erste Spieler die Schlagrichtung noch verändern kann und der Ausschwungphase e wo dies nicht mehr der Fall ist, dar. Wie zuvor erwähnt, ist hier allerdings eine entsprechend schnelle Detektion des Treffpunkts T bzw. Ballkontakts Voraussetzung, damit die Shutter-Brille 3 früh genug schließt und der zweite Spieler 2 den Tennisball 6 nach dem Treffpunkt T nicht mehr sieht. Eine schnelle Verschlusszeit von < 5 ms vom Auftreffen des Tennisballs auf dem Tennisracket 4 bis zur vollkommenen Verdunklung der Shutter-Brille 3 ist somit vorteilhaft.

Um dies zu gewährleisten, kann z.B. eine spezifische Hardware zum Einsatz kommen. Die Erstellung und Übermittlung des Steuersignals an die Shutter-Brille 3 kann z.B. mittels eines Mikrocontrollers erfolgen, der unmittelbar nach dieser Detektion der Ausführungsbewegung, im ersten Ausführungsbeispiel der Detektion des Treffpunkts T bzw. Ballkontakts, durch den Beschleunigungssensor 5 ein vom Beschleunigungssensor 5 erstelltes Triggersignal einliest und daraufhin ein Steuersignal für die Shutter-Brille 3 erstellt und mittels der Sendevorrichtung 12 über eine Ausgangsschaltung per Funk an die Shutter-Brille 3 aussendet.

Dieses Steuersignal wird von der an der Shutter-Brille 3 des zu trainierenden zweiten Spielers 2 angeordneten Empfangseinheit 20 empfangen und z.B. von der Empfangsvorrichtung 22 mittels einer Eingangsschaltung ausgewertet, von der Steuereinheit 21 verarbeitet und an die Steuerungsvorrichtung 23 als Signal für die verschließbaren Gläser der Shutter-Brille 3 weitergeleitet, sodass diese im ersten Ausführungsbeispiel die Shutter-Brille 3 unmittelbar von transparent auf intransparent geschaltet werden. So wird erzielt, dass zumindest ein Teil der Ausführungsbewegung vor dem Kontakt mit dem Tennisball für den zweiten Spieler 2 sichtbar ist und der Tennisball nach dem letzten Kontakt mit dem Tennisracket 4 im Rahmen der Ausführungsbewegung für den zweiten Spieler 2 für einen vorgegebenen Zeitraum nicht mehr sichtbar ist.

Die Shutter-Brille 3 kann optional nach Empfang des Steuersignals nach einem vorab wählbaren bzw. definierbaren Programm gesteuert werden, in dem z.B. die Verdunkelungszeit mittels einer entsprechenden App auf einem Smartphone festgelegt werden kann. So kann die Shutter-Brille 3 z.B. für einen Zeitraum von 200 ms geschlossen werden, sodass der zu trainierende zweite Spieler 2 für diesen Zeitraum quasi blind ist.

Der Verdunkelungszeitraum kann aber auch abhängig von der Schlaghärte und/oder der Geschwindigkeit der Ausführungsbewegung beim Treffpunkt T variiert werden. Sinnvoll ist hier eine kurze Verdunkelungszeit für schnell gespielte Spielobjekte 6 und eine lange Verdunkelungszeit für langsam gespielte Spielobjekte 6. Dadurch kann erreicht werden, dass auch bei langsam gespielten Spielobjekten 6 der Trainingsreiz hoch ist und bei schnell gespielten Bällen es noch möglich ist, das Spielobjekt 6 retournieren zu können. Um dies zu detektieren, kann der Beschleunigungssensor 5 die auftretenden Vibrationen detektieren. Wird ein Spielobjekt 6 mit viel Wucht geschlagen, misst der Beschleunigungssensor 5 starke Vibrationen bzw. sind dessen Spitzenwerte sehr groß. Je größer der Spitzenwert, umso schneller ist das geschlagene Spielobjekte 6 und umso kürzer kann die Verdunkelungszeit gewählt werden. Diese gewählte Verdunkelungszeit kann dann gemeinsam mit dem Steuersignal für die Verdunkelung an die Verdunkelungsbrille, z.B. Shutter-Brille 3, übermittelt werden.

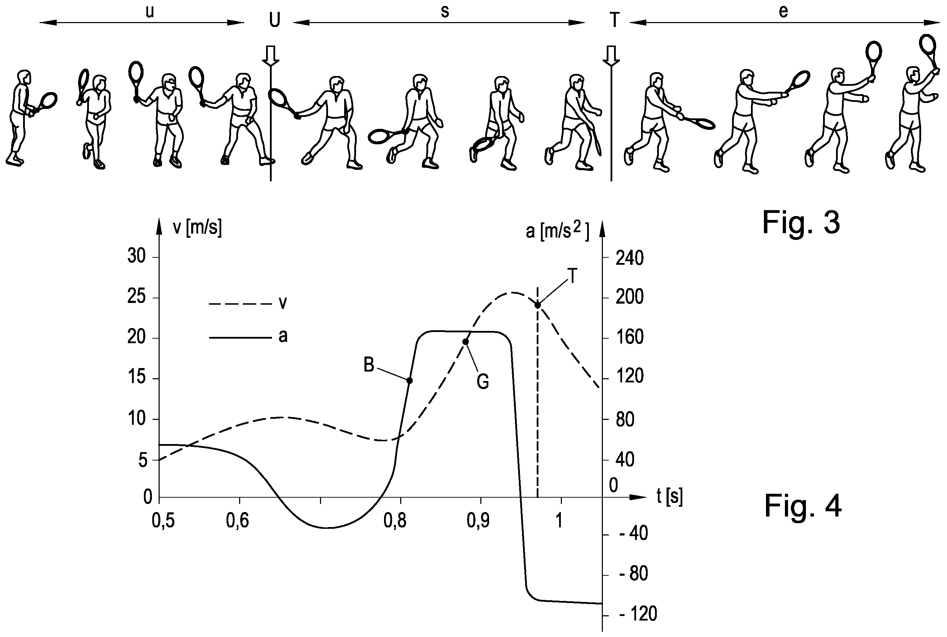

Der Verdunkelungszeitraum kann auch, wie zuvor erwähnt, abhängig von der Geschwindigkeit v am Treffpunkt T gewählt werden. Zur Berechnung der Geschwindigkeit v kann die Integration der gemessenen Beschleunigung a herangezogen werden bzw. kann auch durch Kombination mit dem Signal eines Gyroskopsensors 7 und ggf. auch eines Magnetometers 8 die Berechnung der Geschwindigkeit v genauer erfolgen (siehe auch Fig. 4). In Fig. 4 geben B einen möglichen Schwellenwert für Beschleunigung a, G einen möglichen Schwellenwert für die Geschwindigkeit v und T den Zeitpunkt des Treffpunkts an.

Je höher die Geschwindigkeit v am Treffpunkt T ist, umso schneller ist das geschlagene Spielobjekt 6 bzw. der Ball und umso kürzer kann der Verdunkelungszeitraum gewählt werden. Diese gewählte Verdunkelungszeit kann dann gemeinsam mit dem Steuersignal für die Verdunkelung an die Verdunkelungsbrille, z.B. Shutter-Brille 3, übermittelt werden.

Für die Umsetzung kann die Anordnung 100, insbesondere die Steuereinheit 11, am Tennisracket 4 neben einem Triggersignal bzw. Steuersignal für die Verdunkelung der Shutter-Brille 3 optional zusätzlich einen der Schlaghärte bzw. der Geschwindigkeit der Ausführungsbewegung oder des Spielobjekts 6 entsprechenden Verdunkelungszeitraum vorgeben. In der Steuereinheit 11 der Anordnung 100 ist in diesem Fall eine entsprechende Parametrierung hinterlegt, damit die Werte von Schlaghärte bzw. Geschwindigkeit abhängig von der Parametrierung in Verdunkelungszeiten umgerechnet werden können.

Eine weitere Art den Verdunkelungszeitraum zu definieren, kann darin bestehen, dass, durch den Ballkontakt des Spielobjekts 6 mit dem Tennisracket 4 am Treffpunkt T beim Retournieren durch den zu trainierenden zweiten Spieler 2 die Verdunkelungsbrille bzw. die Shutter-Brille 3 wieder transparent geschaltet wird. Der zu trainierende zweite Spieler 2 ist somit bis zum Treffpunkt T quasi blind, da seine Shutter-Brille 3 intransparent geschaltet ist. Hierfür ist optional auch auf dem Tennisracket 4 des zweiten Spielers 2 eine Empfangseinheit 10 am Racket montiert, die einen Beschleunigungssensor 5 und/oder ein Lagesensor beinhaltet, um einen Treffpunkt T detektieren zu können und um anschließend die Verdunkelungsbrille bzw. die Shutter-Brille 3 des zweiten Spielers 2 anzusteuern. Hierauf wird weiter unten noch näher eingegangen.

Des Weiteren ist es auch möglich, die Shutter-Brille 3 des zweiten Spielers 2 wieder transparent zu schalten, wenn eine Ausführungsbewegung erkannt wurde, insbesondere eine vorgebbare Lage, wie z.B. den Umkehrpunkt U. Die Transparent-Schaltung bei Detektion des Umkehrpunkts U hat den Vorteil, dass der zweite Spieler 2 erst kurz bevor er das Spielobjekt 6 trifft, wieder sehen kann, wo sich das Spielobjekt 6 befindet und kann somit seine berechnete bzw. antizipierte Flugbahn des Spielobjekts 6 mit der wirklichen abgleichen bzw. hat der zweite Spieler 2 unter Umständen noch die Chance, die Abweichung zu korrigieren, um das Spielobjekt 6 noch zu treffen. Hierauf wird später noch näher eingegangen.

Optional können selbstverständlich auch der erste Spieler 1 und der zweite Spieler 2 jeweils eine Shutter-Brille 3 tragen, sodass vorteilhafterweise während eines Spiels abwechselnd beide Spieler 1, 2 trainiert werden. In diesem Fall weisen die Tennisrackets 4 beider Spieler jeweils einen Sensor, z.B. einen Beschleunigungssensor 5, auf, mit denen jeweils Ausführungsbewegungen detektiert werden.

So kann z.B. bei Detektion des Treffpunkts T bzw. des Auftreffens des Tennisballs 6 auf dem Tennisracket 4 des ersten Spielers 1 die Shutter-Brille 3 des zweiten Spielers 2 intransparent geschaltet werden, um die Antizipationsfähigkeit des zweiten Spielers 2 zu trainieren. Die Shutter-Brille 3 des zweiten Spielers 2 kann anschließend nach einem vorgegebenen Zeitraum wieder transparent geschaltet werden.

Anschließend kann z.B. bei Detektion des Treffpunkts T bzw. des Auftreffens des Tennisballs 6 auf dem Tennisracket 4 des zweiten Spielers 2 die Shutter-Brille 3 des ersten Spielers 1 intransparent geschaltet werden, um die Antizipationsfähigkeit des ersten Spielers 1 zu trainieren. Auf diese Weise ist ein wechselseitiges Training der Antizipationsfähigkeit beider Spieler 1, 2 möglich.

Ein derartiges, wechselseitiges Training ist selbstverständlich auch bei anderen Racketsportarten wie Tischtennis oder Badminton möglich.

Ein erfindungsgemäßes Verfahren bzw. eine erfindungsgemäße Anordnung 100 können jedoch auch, wie bereits zuvor erwähnt, in anderen Sportarten eingesetzt werden. Beispielsweise kann ein Training der Antizipationsfähigkeit eines Tormanns beim Fußball oder Handball erzielt werden, wenn im entsprechenden Spielobjekt oder im Fall des Fußballtrainings gegebenenfalls zusätzlich oder alternativ dazu im Schuh des Spielers, der den Ball spielt, ein entsprechender Sensor eingebaut ist, der die Ausführungsbewegung detektiert, mit der das Spielobjekt 6 auf seine Flugbahn gebracht wird. Dies kann z.B. der Zeitpunkt sein, an dem ein ruhender Fußball getroffen wird, oder im Fall des Werfens eines Handballs ein vorgegebener Beschleunigungswert a überschritten wird.

Ein erfindungsgemäßes Verfahren bzw. eine erfindungsgemäße Anordnung 100 können selbstverständlich auch bei Mannschaftssportarten eingesetzt werden, wenn mehr als zwei Spieler trainiert werden sollen.

Als ein Beispiel in diesem Zusammenhang sei ein Tennis-Doppel genannt: Bei Detektion der Ausführungsbewegung werden jeweils die Verdunkelungsbrillen der gegnerischen Spieler intransparent geschalten, wobei das Antizipieren der Flugbahn des Spielobjekts 6 von den jeweils retournierenden Spielern trainiert wird. Hierfür kann optional zusätzlich zum Steuersignal für die Verdunkelungsbrillen auch eine Kennnummer mitgeschickt werden, damit jeweils die entsprechend richtigen Verdunkelungsbrillen intransparent geschaltet werden und nur die Sicht der retournierenden Spieler verdunkelt wird.

Es können zwei Mannschaften mit jeweils mehreren Spielern trainiert werden, wobei alle Spieler des ersten Teams und alle Spieler des zweiten Teams jeweils eine Verdunkelungsbrille, z.B. eine Shutter-Brille 3, tragen. Dabei werden bei allen Spielern jeweils Ausführungsbewegungen mit z.B. einem oder mehreren entsprechenden Sensoren, die in Fußballschuhen verbaut, oder z.B. an den Armen von Volleyballspielern angeordnet sind, detektiert. Alternativ dazu können der oder die Sensoren auch im Spielobjekt selbst integriert sein, wobei in diesem Fall zusätzlich mittels z.B. GPS oder Bluetooth-Beacons erkannt werden kann, auf welcher Seite des Spielfelds sich das Spielobjekt 6 gerade befindet. Bei Detektion einer Ausführungsbewegung durch einen Spieler des ersten Teams werden die Shutter-Brillen 3 der Spieler des zweiten Teams intransparent geschaltet und umgekehrt oder dass die Verdunkelungsbrillen von allen Spielern außer von demjenigen Spieler, der die Ausführungsbewegung durchführt, intransparent geschalten werden.

Bei einem Fußballtraining können so bei Detektion einer Ausführungsbewegung die Shutter-Brillen 3 aller Spieler intransparent geschalten werden. Die Shutter-Brille 3 des ausführenden Spielers kann optional ebenfalls geschlossen werden. Sowohl die angreifende Mannschaft, als auch die abwehrende Mannschaft, versucht die Flugbahn des Spielobjekts 6 zu antizipieren. Dadurch lernen Spieler, den ersten Schritt um einen Bruchteil einer Sekunde früher in die richtige Richtung zu machen und somit früher am Ball zu sein, um ein Tor zu erzielen bzw. sich frühzeitig gut für den Spielaufbau zu positionieren.

Um ein besonders effektives und abwechslungsreiches Training zu ermöglichen, kann die Shutter-Brille 3 einer erfindungsgemäßen Anordnung zusätzlich Steuersignale empfangen, die z.B. von einem Steuergerät ausgesendet werden, das der Trainer des zu trainierenden Spielers manuell betätigen kann. So kann der Trainer z.B. einen Druckknopf betätigen, um die Verdunkelung der Shutter-Brille 3 zu triggern oder aufzuheben, oder zwischen verschiedenen Möglichkeiten der Detektion der Ausführungsbewegung bzw. den Modus zu wechseln.

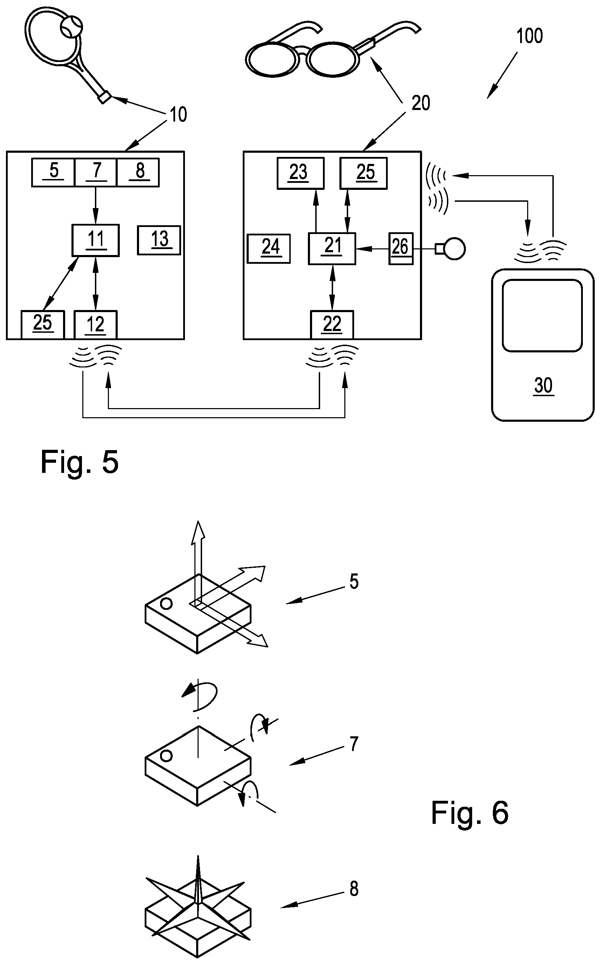

Im Folgenden wird ein erstes **Ausführungsbeispiel einer erfindungsgemäßen Anordnung 100** zur Durchführung eines erfindungsgemäßen Verfahrens anhand Fig. 5 im Detail erläutert. Die Anordnung 100 umfasst im Ausführungsbeispiel als Verdunkelungsbrille eine Shutter-Brille 3. Alle Ausführungen in diesem Zusammenhang sind jedoch auch für andere Arten von Verdunkelungsbrillen wie Virtual-Reality-Brillen gültig.

Grundsätzlich ist es wünschenswert, dass eine erfindungsgemäße Anordnung 100 folgende Anforderungen erfüllt, um einen möglichst angenehmen und störungsfreien Trainingsablauf für die Spieler zu ermöglichen, während das Training gleichzeitig effektiv gestaltet wird:
- Robustheit,
- kabellose Datenübertragung mit einer Reichweite von z.B. mind. 40 m bis 140 m,
- Ansprechzeit von z.B. maximal 8 ms,
- kleine spezifische Bauform, geringes Gewicht für einfache Integration in Sportgeräten bzw. Sportausrüstungsgegenständen und an der Shutter-Brille 3, sodass die Spieler nicht durch hohes Gewicht oder sperrige Komponenten beim Training beeinträchtigt werden,
- niedriger Energieverbrauch.

Wie bereits zuvor erwähnt, umfasst eine erfindungsgemäße Anordnung 100 dazu grundsätzlich zumindest folgende Komponenten:
- eine Verdunkelungsbrille, die bei Vorliegen eines Steuersignals transparent oder intransparent schaltet,
- eine Steuereinheit, die bei Detektion einer Ausführungsbewegung durch den Sensor ein Steuersignal für die Verdunkelungsbrille erstellt und an die Verdunkelungsbrille übermittelt, sodass die Verdunkelungsbrille intransparent schaltet und
- einen Sensor zur Detektion der Ausführungsbewegung.

Vorzugsweise kann ein Smartphone 30 mit einer Software in Form eines darauf installierten Apps in Datenkommunikation mit einer erfindungsgemäßen Anordnung 100 stehen, um Parameter für die Anordnung 100 vorgeben zu können bzw. Vorgaben und Einstellungen auswählen zu können. Hierauf wird weiter unten noch näher eingegangen.

Wie bereits zuvor erwähnt, kann es sich beim Sensor um z.B. einen Beschleunigungssensor 5 oder einen Lagesensor handeln, oder es können auch mehrere Sensoren gleichzeitig eingesetzt werden, die z.B. am Griff eines Rackets im Bereich des Griffendes angeordnet sind.

Der Sensor kann bzw. die Sensoren können bei einer erfindungsgemäßen Anordnung 100 entweder nachträglich an einem Spielgerät wie einem Racket oder z.B. einem Fußballschuh oder einer Armmanschette befestigt werden, oder bereits vorab im Spielgerät, dem Fußballschuh etc. integriert bzw. darauf angeordnet sein.

Für die Durchführung eines erfindungsgemäßen Verfahrens wie es anhand von Fig. 2 beschrieben wurde, umfasst die Anordnung 100 im ersten Ausführungsbeispiel eine **Sendeeinheit 10,** die am Tennisracket 4 des ersten Spielers 1 angeordnet ist: So umfasst die Sendeeinheit 10 der Anordnung 100 einen Beschleunigungssensor 5 zur Detektion der Ausführungsbewegung, z.B. in Form des Ballkontakts oder einer definierbaren Position in der Schlag- oder Bewegungsdurchführung.

Generell ist ein einzelner Sensor zur Detektion der Ausführungsbewegung ausreichend. Beim Ausführungsbeispiel in Fig. 5 ist neben einem Beschleunigungssensor 5 zur Detektion des Treffpunkts T bzw. des Auftreffens eines Tennisballs auf dem Tennisracket 4 jedoch auch ein Gyroskopsensor 7 vorgesehen. Zusätzlich ist im Ausführungsbeispiel in Fig. 5 auch noch ein Magnetfeldsensor bzw. Magnetometer 8 vorgesehen. Es können jedoch auch mehrere Magnetometer 8 oder Gyrsokopsensoren 7 vorhanden sein.

Da Tennisrackets 4 Eigenfrequenzen von bis zu 200 Hz haben, kann bei einer erfindungsgemäßen Anordnung 100 die Samplefrequenz des Beschleunigungssensors 5 vorteilhafterweise so gewählt werden, dass sie mindestens 400 Hz beträgt, sodass das Signal das die Vibrationen eines auftreffenden Tennisballs gut rekonstruiert werden kann. Auf Basis dieses Signals wird der Treffpunkt bzw. das Auftreffen eines Tennisballs auf dem Tennisracket 4 ermittelt. Die Vibrationen erreichen Beschleunigungswerte von mind. 65 m/s² (siehe Fig. 6). Deshalb wird im Ausführungsbeispiel ein Beschleunigungssensor 5 mit mind. 8 g gewählt.

Dabei handelt es sich im gezeigten ersten Ausführungsbeispiel um einen Beschleunigungssensor 5 des Typs LSM9DS1, der eine Sample Rate von 952 Hz, einen Messbereich von +/- 16g, eine Auflösung von 16 Bit und Abmaße von 3 mal 3,5 mm aufweist. Es können aber auch andere geeignete Beschleunigungssensoren eingesetzt werden. Durch die Fusionierung der verschiedenen Sensorwerte des Beschleunigungssensors 5, Gyroskopsensors 7 und Magnetometers 8 mit Hilfe eines Kalman-Filters bekommt man einen "optimierten Lagesensor". (siehe Fig. 6). Dadurch ist jeweils die Detektion der Komponenten der Beschleunigung a, der Winkelgeschwindigkeiten und des Magnetfelds in den drei Raumrichtungen möglich (siehe schematische Darstellung der jeweiligen Komponenten in Fig. 6).

Besonders vorteilhaft kann in diesem Zusammenhang ein linearer Beschleunigungssensor 5, eingesetzt werden, der die Beschleunigung a, aber auch Vibrationen von Objekten in x-, y-und z- Richtung misst. Deshalb ist diese Art von Sensor sehr gut geeignet, um Vibrationen, die durch einen Aufprall von Spielobjekten 6 auf z.B. einem Racket entstehen, hochfrequent zu messen um daraus den Zeitpunkt des Treffpunkts T mit einer besonders geringen Verzögerung von ca. 1 ms, ggf. mit Hilfe von Prozessor-Nachverarbeitung, zu ermitteln. Des Weiteren können aber auch Bewegungen des Rackets oder eines Athleten (Hand-Armbewegung bei Handball, oder Bein- bzw. Fußbewegung bei Fußball) hochfrequent ermittelt werden, um daraus ein Steuer- bzw. Triggersignal für den Verschluss der Shutter-Brille 3 bei definierbaren Zuständen zu generieren.

Die Sendeeinheit 10 umfasst im ersten Ausführungsbeispiel in Fig. 5 weiters eine Verarbeitungseinheit 11, die die von den Sensoren ermittelten Messwerte verarbeitet. Hierfür wird im ersten Ausführungsbeispiel ein Mikrocontroller eingesetzt. Der Mikrocontroller der Sendeeinheit 10 in Fig. 5 zeichnet sich dadurch aus, dass er kompakt und leicht aufgebaut ist, über ein schnelles, serielles Interface zum Auslesen der Sensordaten und Verarbeitungszeiten von ca. 1 ms bei einer Sample Rate von 952 Hz aufweist. So ist es auch möglich, die verschiedenen Sensormesswerte mit Hilfe eines Kalman-Filters zu einem optimierten Sensormesswert zu verknüpfen.

Die Messwerte der Sensoren 5, 7, 8 werden über Eingänge des Mikrocontrollers von einem Prozessor eingelesen und verarbeitet. Anschließend werden diese Messwerte ausgewertet, um ein Steuersignal für die Shutter-Brille 3 zu erzeugen. Das Steuersignal wird vom Mikrocontroller an eine am Tennisracket 4 angeordnete Sendevorrichtung 12 weitergeleitet, die das Steuersignal anschließend via Funk aussendet. Eine Übertragung über eine Funkverbindung stellt vorteilhafterweise sicher, dass für verschiedenste Sportarten geeignete Reichweiten gewährleistet werden können, wie z.B. im Tennis bis zu 40m (Indoor und Outdoor), im Fußball bis zu 140m (Outdoor), 70m (Indoor), im Tischtennis bis zu 20m (Indoor), im Badminton bis zu 20m (Indoor) oder im Eishockey bis zu 70m (Indoor). Weiters stellt eine kabellose Datenübertragung vorteilhafterweise sicher, dass die Spieler nicht in ihrer Bewegungsfreiheit eingeschränkt bzw. gestört werden.

Die Sendeantenne der Sendevorrichtung 12 in Fig. 5 ist vorteilhafterweise als Chip-Antenne ausgebildet und somit besonders kompakt und kann im Bereich von mehreren 100 MHz betrieben werden. Auf diese Weise ist eine ausreichend hohe Übertragungsgeschwindigkeit, Reichweite und ein entsprechender Abdeckungsbereich in alle Richtungen für die Aussendung des Steuersignals realisiert. Im Ausführungsbeispiel handelt es sich dabei um eine Sendeantenne vom Typ Chip-Antenne von Johanson Technology mit Abmessungen von 10 mal 11 mm. Optional könnten auch Isotropstrahler (Kabelantennen) in Frage, die eine noch gleichmäßigere Ausstrahlungscharakteristik in alle Richtung aufweisen.

Die Sendeeinheit 10 ist im ersten Ausführungsbeispiel in Fig. 2 bzw. Fig. 5 am Ende der Griffseite des Tennisrackets 4, dem Knauf, angeordnet. Auf der Griffseite sind die auftretenden Beschleunigungen a am geringsten und ein Zusatzgewicht hat hier die geringsten Auswirkungen auf das Schwungverhalten des Tennisrackets 4. Auf die Anordnung der Sendeeinheit 10 wird im Folgenden noch näher eingegangen.

Im ersten Ausführungsbeispiel umfasst die Anordnung 100 weiters eine **Empfangseinheit 20,** die an der Shutter-Brille 3 des zweiten Spielers 2 angeordnet ist: Das von der Steuereinheit 11 der Sendeeinheit 10 erstellte Steuersignal wird an der Shutter-Brille 3 mittels einer Empfangsantenne 22, empfangen und an eine weitere Steuereinheit 21 weitergeleitet. Bei dieser weiteren Steuereinheit 21 handelt es sich im ersten Ausführungsbeispiel ebenfalls um einen Mikrocontroller. Der Mikrocontroller der Empfangseinheit 20 leitet das Steuersignal an die Steuerungsvorrichtung 23 zur Ansteuerung der Shutter-Brille 3, die eine entsprechende Verstärkereinheit umfasst, weiter.

Die Empfangseinheit 20 ist vorteilhafterweise kompakt und leicht ausgebildet.

Die Sendeeinheit 10 ist vorteilhafterweise, wie bereits oben erwähnt, kompakt und leicht ausgebildet und verfügt zusätzlich zu der Funkschnittstelle für die Übertragung des Steuersignals noch über eine WLAN und Bluetooth Schnittstelle, um Datenstreaming zu einem Computer bzw. zu einem externen Bluetooth- oder WLAN-Modul zu gewährleisten.

Von der Verstärkereinheit der Steuerungsvorrichtung 23 wird das empfangene Steuersignal in ein Steuersignal mit einem entsprechenden Signalpegel zur Ansteuerung der Shutter-Brille 3 erzeugt, um die Shutter-Brille 3 intransparent zu schalten. Informationen z.B. bezüglich möglicher Verdunkelungsdauern der Shutter-Brille 3, sowie weitere Parameter sind im ersten Ausführungsbeispiel im Mikrocontroller der Empfangseinheit 20 hinterlegt.

Die verschließbaren Gläser der Shutter-Brille 3 weisen im Ausführungsbeispiel in Fig. 5 eine Verschlusszeit von Transparenz auf Intransparenz von kleiner oder gleich 1 ms auf. Die Ballkontaktzeit, vom Auftreffen das Balles am Schläger bis er ihn wieder verlässt, beträgt im Tennis, wie bereits zuvor erwähnt, ca. 5 ms. Somit wäre diese Zeitspanne für den gesamten Ablauf von der Erkennung der Ausführungsbewegung bis zum absoluten Verdunkeln der Shutter-Brille 3 gegeben. Zusätzlich zu den 5 ms kann noch eine kurze Zeitspanne addiert werden, da der Mensch dynamische Abläufe mit dem Auge nur mit einer bestimmten Frequenz wahrnehmen kann. Aus dem Bereich der Spieleindustrie ist hierfür ein Wert von 200 Hz bekannt, was einer Zeit von 5 ms entspricht.

D.h., dass ein gut trainierter Spieler die Flugbahn 5 ms nachdem der Ball den Schläger verlässt, unter Umständen schon zumindest teilweise erfassen könnte bzw. eine Tendenz der Abflugrichtung des Balles erkennen könnte. Eine Ansprechzeit von kleiner 8 ms von der Detektion der Ausführungsbewegung in Form des Treffpunkts bis zur Verdunkelung der Shutter-Brille 3 ist bei einer Verschlusszeit von kleiner oder gleich 1 ms jedenfalls gewährleistet.

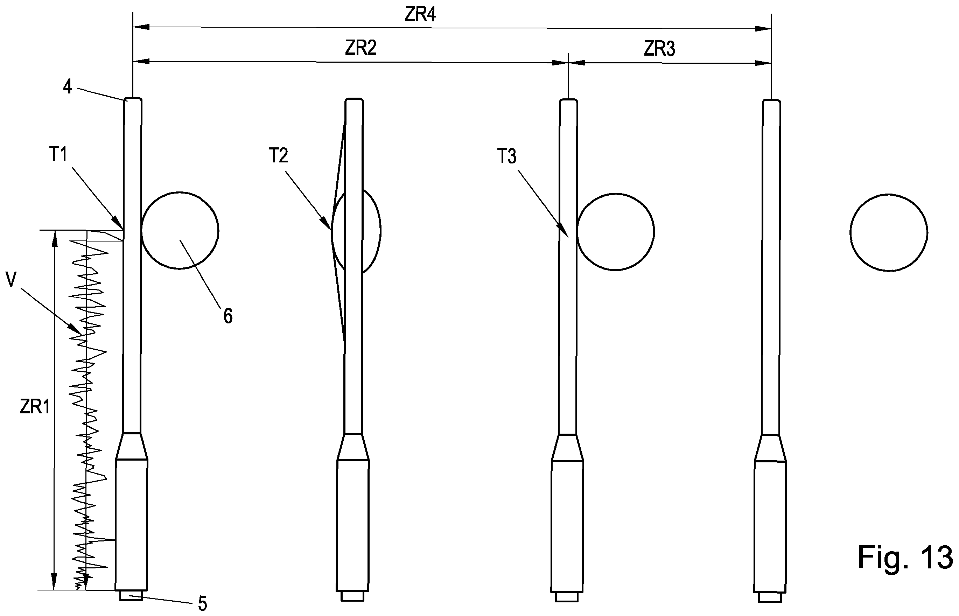

Die Ballkontaktzeit (siehe Fig. 13) ist am Beispiel Tennis von mehreren technischen Parametern abhängig. Die Steifigkeit des Schlägerrahmens und die Bespannhärte und Materialcharakteristik der Saiten, die Schwunggeschwindigkeit des Rackets und die Ballhärte sind die Hauptkomponenten aus denen sich die Ballkontaktzeit ergibt. Somit ist die Ballkontaktzeit auch im Tennis nicht fix, sondern hat einen Spielraum von ca. 4-6 ms. Als maximales Limit für die Zeitspanne ZR4 zwischen der Detektion der Ausführungsbewegung und dem Zeitpunkt, an dem die Shutter-Brille 3 vollkommen intransparent geschalten sein sollte, können für Tennis somit 9 ms definiert werden. 4 ms Ballkontaktzeit ZR2 + 5 ms Trägheit des menschlichen Auges ZR3. In Fig. 13 kennzeichnet T1 den Zeitpunkt des ersten Kontakts des Balls mit dem Racket 4, T2 den Zeitpunkt der maximalen Verformung der Bespannung des Tennisrackets 4 durch den Ball und T3 den Zeitpunkt des letzten Kontakts des Balls mit dem Tennisrackets 4.

Am Beispiel Tischtennis sind die technischen Parameter wieder unterschiedlich und es ergibt sich eine Ballkontaktzeit von ca. 2 ms und somit ein maximaler Zeitraum ZR4 von 7 ms.

Bei Fußball hingegen ist der Ball größer, schwerer und weicher und deshalb ergibt sich eine längere Ballkontaktzeit. Die Ballkontaktzeit ist somit sportartspezifisch unterschiedlich und auch innerhalb der Sportart gibt es leichte Unterschiede aufgrund von unterschiedlichen Gegebenheiten.

Bei allen Ballsportarten sollte sich die Ballkontaktzeit jedoch in einem Zeitraum von 1-10 ms befinden. Die 5 ms von ZR3 können allerdings als Konstante angenommen werden. Für die Technik bedeutet dieser kurze Zeitraum eine große Herausforderung da das Gesamtsystem der Vorrichtung 100 einige Aufgaben innerhalb dieser kurzen Zeitspanne abarbeiten muss wobei jede Aufgabe aus technischen Gründen eine bestimmte Zeitdauer erfordert. Zu beachten ist ebenfalls, dass die Vibrationen, die beim Aufprall des Balls auf einem Tennisracket entstehen, ebenfalls eine bestimmte Zeit benötigen, bis sie am Einbauort des Sensors angekommen sind(siehe ZR1 in Fig. 13). Im Fall, dass der Sensor am Griffende, also im Schlägerknauf, eingebaut ist, entspricht diese Zeit ca. 3,75 ms.

Die Gesamtdauer setzt sich im Wesentlichen aus folgenden Aufgaben, aus denen sich bestimmte Zeitdauern ergeben, zusammen:
Gesamtdauer = Zeit bis die Vibrationen am Einbauort des Sensors ankommen + Erkennung Ballkontakt der Sensorik 5, 7, 8 + Verarbeitung durch Steuereinheit 11 + Senden des Signals durch Sendevorrichtung 12 + Empfang des Signals durch Empfangsvorrichtung 22 + Verarbeitung des Signals von Steuereinheit 21 + Ausgabe eines Signals zur Verschließung der Brillengläser + Verzögerung bis das Brillenglas vollkommen abgedunkelt hat.

Die Anordnung 100 beschreibt den Aufbau von Sensorik 5, 7, 8, Steuereinheiten 11, 21, Sende- und Empfangsvorrichtungen 12, 22 und Steuereinheit für die Brille die diese Anforderungen erfüllen. Um eine zeitoptimierte Übertragung zwischen dem Sende- und Empfangsmodul zu realisieren agiert eine proprietäre Schnittstelle die auf Funktechnologie basiert. Die Funkfrequenz befindet sich innerhalb des ISM Bandes. Entscheidend für eine schnelle und zeitoptimierte Übertragung ist des Weiteren die Anwendung eines spezifischen Protokolls um den Datentransfer mit möglichst geringer Verzögerung zwischen den Sendeund Empfangseinheiten zu realisieren.

Weiters weist die Shutter-Brille 3 einen hohen Kontrast auf, sodass das Spielobjekt durch die Shutter-Brille 3 nicht mehr gesehen werden kann, wenn diese intransparent geschaltet ist. Der Kontrast beträgt vorteilhafterweise > 2.000:1.

Im ersten Ausführungsbeispiel ist die Empfangseinheit 20 im Brillenrahmen der Shutter-Brille 3 integriert, sodass der zu trainierende zweite Spieler 2 keine störenden zusätzlichen Komponenten am Körper tragen braucht und keinerlei Kabelverbindungen erforderlich sind. Optional ist es auch möglich, dass die Empfangseinheit 20 in einem Brillenbügel der Shutter-Brille 3 untergebracht ist.

Weiters kann die Empfangseinheit 20 in Fig. 5 einen schnellen Treiber zur Ansteuerung der Gläser der Shutter-Brille 3 und eine Spannungsversorgung für den Treiber umfassen.

Im ersten Ausführungsbeispiel ist es weiters möglich, mittels eines Bluetooth- oder WLAN-fähigen Smartphones 30 unter den im Mikrocontroller der Empfangseinheit 20 hinterlegten Parametern bzw. Verdunkelungszeiträumen zu wählen. Dazu kann eine App auf dem Smartphone 30 installiert sein und die Empfangseinheit 20 optional ein entsprechendes Bluetooth- oder WLAN-Empfangsmodul 25 umfassen.

Die Sendeeinheit 10 der Anordnung 100 umfasst im Ausführungsbeispiel also zumindest folgende Hardware-Komponenten: Einen Beschleunigungssensor 5, eine Steuereinheit 11, und eine Sendeeinheit 12 mit einer Übertragungsschnittstelle, die alle auf dem Tennisracket 4 des ersten Spielers 1 angeordnet sind.

Des Weiteren ist es möglich, mittels eines Bluetooth- oder WLAN-fähigen Smartphones 30 unter den im Mikrocontroller der Sendeeinheit 10 hinterlegten Parametern bzw. Verdunkelungszeiträumen zu wählen. Dazu kann eine App auf dem Smartphone 30 installiert sein und die Sendeeinheit 10 kann ebenfalls ein entsprechendes Bluetooth- oder WLAN-Empfangsmodul 25 umfassen. Die Parameter werden abhängig vom gewählten Programm von der Steuereinheit 11 ausgelesen und dementsprechend werden die Steuersignale für die Empfangseinheit 20, das im Ausführungsbeispiel in Form eines Brillenmoduls vorliegt, generiert.

Die Empfangseinheit 20 umfasst zumindest eine Empfangsantenne 22, eine Steuereinheit 21 und eine Steuerungseinheit 23 zur Ansteuerung der Shutter-Brille 3, die an der Shutter-Brille 3 angeordnet sind.

Auf der Steuereinheit 11 der Sendeeinheit 10 sind im Ausführungsbeispiel entsprechende Verfahrensschritte zur Auswertung der Sensormesswerte und Erstellung des Steuersignals für die Shutter-Brille 3, sowie zum Senden der erstellten Steuersignale, sowie auf der Steuereinheit 21 der Empfangseinheit 20 entsprechende Verfahrensschritte zum Empfangen des übermittelten Steuersignals und Erstellen eines Steuersignals für die Ansteuerung der Shutter-Brille 3 hinterlegt.

### Positionierung der Sende- und Empfangseinheit

Um zu erzielen, dass ein Anordnen an z.B einem Racket oder in einem Fußballschuh möglich ist, weisen die jeweiligen Komponenten einer erfindungsgemäßen Anordnung 100 eine kleine spezifische Bauform auf. Damit die Sendeeinheit 10 auf jegliches Racket montiert werden kann, ohne dass die Spieler sich beeinträchtigt fühlt, weist die Sendeeinheit 10 einer erfindungsgemäßen Anordnung 100 vorteilhafterweise sehr kleine Abmessung auf. Die Bauform kann je nach Sportart aber auch bei unterschiedlichen Marken bzw. Schlägertypen unterschiedlich sein.

Positionierung der Sendeeinheit 10 am Racket kann je nach Sportart gewählt werden: Bei einem Tennisracket 4 befindet sich eine geeignete Stelle z.B. am Griffende des Tennisrackets 4, auch Knauf genannt. Der Knauf hat meist eine ovale Bauform, sodass auch die Sendeeinheit vorteilhafterweise eine ovale Bauform aufweist. Für ein Tennisracket 4 beträgt die maximale Länge der Sendeeinheit vorteilhafterweise 25 mm bei einer Breite von 20 mm. Da der Knauf bzw. auch der Griff des Tennisrackets 4 innen hohl sind, kann die Sendeeinheit vorteilhafterweise im Inneren des Knaufes installiert sein. Hier kann vorteilhafterweise eine maximale Tiefe der Sendeeinheit 10 von 20 mm gewählt werden. Für Tischtennis und Badminton wären die maximalen Abmessungen natürlich dementsprechend kleiner.

Im Fußball würde sich die Sendeeinheit 10 im Ball oder in einem Fußballschuh befinden. Die Bauform der Sendeeinheit kann hierfür vorteilhafterweise sehr flach gewählt werden, sodass der Spieler nicht beeinträchtigt wird, wenn die Sendeeinheit 10 im Fußballschuh integriert ist.

Da selbst kleinste zusätzliche Gewichte im Grammbereich die Balance eines Schlägers für den Spieler verändern können, können diese in weiterer Folge auch die Schlagdurchführung beeinflussen. Das Gewicht der Sendeeinheit 10 wird daher bei einer erfindungsgemäßen Anordnung 100 vorteilhafterweise mit max. 5 g gering gehalten, damit die Spieleigenschaft des Schlägers nicht verändert werden. Auch die Empfangseinheit 20 einer erfindungsgemäßen Anordnung 100 weist vorteilhafterweise ein besonders geringes Gewicht auf, sodass Empfangseinheit 20 gemeinsam mit der Shutter-Brille 3 vom zu trainierenden Spieler nicht als störend empfunden wird.

Damit eine erfindungsgemäße Anordnung 100 durchgehend für mind. 12 Stunden ohne zwischenzeitliches Wiederaufladen verwendet werden kann, ist ein niedriger Energieverbrauch wünschenswert. So kann z.B. in der Sendeeinheit 10 und/oder der Empfangseinheit 20 eine Energiequelle in Form einer Batterie oder Akkus vorgesehen sein, die klein und somit auch leicht gehalten werden kann, da ein höherer Energieverbrauch mit einer größeren und somit auch schweren Energieversorgungseinheit 13, 24 einhergeht. Der Energieverbrauch kann bei einer Anordnung 100 weiter gesenkt werden, wenn die Sensoreinheit der Sendeeinheit über eine Threshold-Erkennung verfügt. Die Steuereinheit 11 der Sendeeinheit 10 kann in diesem Fall aus einem Ruhezustand geweckt werden, wenn ein detektierter Messwert eines der Sensoren 5, 7, 8 einen vorgegebenen bestimmter übersteigt und ansonsten im Stromsparmodus bleiben. Dadurch wird der Energieverbrauch gesenkt und die Baugröße und das Gewicht der Energieversorgung können weiter reduziert werden.

Weitere vorteilhafte Ausgestaltungsvarianten einer erfindungsgemäßen Anordnung 100 werden im Folgenden beschrieben:

### Treffpunkt-Erkennung

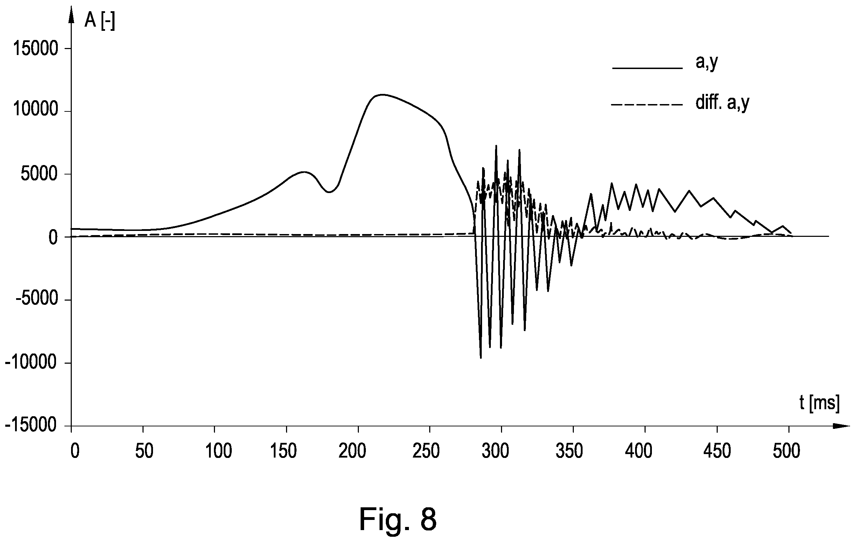

Die Erkennung des Treffpunkts T, der, wie bereits zuvor erwähnt, starke Vibrationen am gesamten Schläger auslöst, kann besonders effektiv nicht direkt anhand des vom Beschleunigungssensor 5 gemessenen Beschleunigungswerts a, sondern anhand einer Differenzierung der Beschleunigungswerte a ermittelt werden. Während der Schlagphase vor dem Treffpunkt T ist der Wert des Differentials bzw. der Ableitung der Beschleunigung a relativ gering. Zum Zeitpunkt des Treffpunktes T steigt das Differential der Beschleunigung a pro Zeiteinheit verursacht durch die Vibrationen im Schläger beträchtlich an (siehe strichlierte Linie in Fig. 8). Deshalb ist es besonders vorteilhaft, diesen Differentialwert der Beschleunigung a (gekennzeichnet mit diff. a in Fig. 8) als Treffpunkterkennung zu wählen (siehe Fig. 8), da dieser berechnete Wert einen klaren Indikator für einen Ballaufprall bzw. den Aufprall eines Spielobjekts 6 auf einem Racket darstellt.

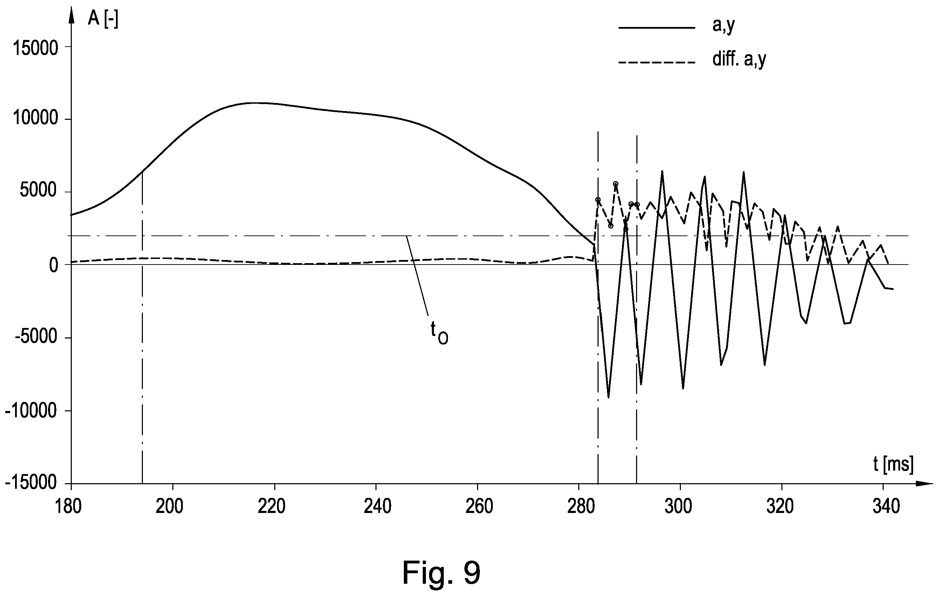

Fig. 9 zeigt, dass der Wert des Differentials am Treffpunkt T deutlich von fast 0 auf über 4000 in einer Millisekunde ansteigt. Somit stellt die Ableitung der Beschleunigung a einen einfach und zuverlässig zu detektierenden Trigger dar. Des Weiteren ist auch die erzielbare besonders kurze Verzögerungszeit von max. 1 ms von großem Vorteil.

Um Fehldetektionen durch mögliche kurze Vibrationen des Rackets, die nicht von einem Schlag stammen, zu vermeiden, kann die Treffpunkt-Erkennung optimiert werden, indem der Treffpunkt T erst nach einer definierten Anzahl von Messwerten, die einen vorgegebenen Schwellenwert tₒ überschreiten, detektiert wird. Die Anzahl der erforderlichen Messwerte, die den Schwellenwert tₒ überschreiten, kann optional z.B. mittels Parametrierung, d.h. Auswahl entsprechender Parameter, über ein Smartphone 30 angepasst werden (siehe Fig. 9). Fig 9 zeigt ein Ausführungsbeispiel dafür, dass das Steuersignal zum intransparent Schalten der Verdunkelungsbrille erst dann übermittelt wird, wenn eine vorgegebene Anzahl von beispielsweise sechs Punkten bei der Berechnung des Differenzials der Beschleunigungswerte a (strichlierte Linie in Fig. 9) in Folge erkannt wurden, die über einer vorgebbaren bzw. parametrierbaren Schwellenwert (z.B. Schwellenwert 2000) liegen.

### Anpassung des Verdunkelungszeitraums

Um den Trainingseffekt für den zweiten Spieler 2 abhängig von den Geschwindigkeiten, mit denen das Spielobjekt 6 gespielt wird, optimieren zu können, kann es vorteilhaft sein, die Dauer des Verdunkelungszeitraum der Verdunkelungsbrille automatisch anzupassen.

Für diese Funktion wird beispielsweise die Geschwindigkeit des Spielobjekts 6, z.B. eines Tennisballs, am Treffpunkt T von der Steuereinheit 11 der Sendeeinheit 10 berechnet und unmittelbar danach als Wert zusätzlich zum Steuersignal zur Empfangseinheit 20 gesendet.

Die Steuereinheit 21 der Empfangseinheit 20 kann dann abhängig von der jeweils gewählten Parametrierung die Verdunkelungszeit wählen. Für die Berechnung der Ballgeschwindigkeit v zum Zeitpunkt des Treffpunkt T wird entweder die Schlägerkopfgeschwindigkeit z.B. des/eines Sweetspots des Rackets beim Treffpunkt T berechnet, oder die Kraft die beim Aufprall auf dem Racket erzeugt wird, ermittelt, welche aus dem Peakwert (Spitzenwert) der Vibration beim Treffpunkt T (siehe Fig. 7) abgeleitet werden kann.

Der Peakwert der Vibration ist zwar vielen Parametern des Rackets abhängig wie der Geschwindigkeit von Schlägerkopf und Ball, Masse und Bauart des Rackets, Ort des Auftreffens des Balls am Schläger (Sweetspot oder nahe Rahmen) usw., liefert aber ausreichend Informationen, um eine zuverlässige Parametrierung zu erreichen. Eine Justierung/Kalibrierung kann z.B. mit 2 Punkten erfolgen:
- langsamer Schlag z.B. 50 km/h,
- schneller Schlag z.B. 100 km/h

Die Werte der daraus resultierenden Peakwerte der Vibrationen können dann dementsprechend zugewiesen werden. Eine zusätzliche Geschwindigkeitsmessung, um die Ballgeschwindigkeit genau zu messen, ist für die Justierung/Kalibrierung z.B. mit Hilfe eines Radarmessgerätes empfehlenswert.

Mit dem Parameter der berechneten Schlägerkopfgeschwindigkeit kann allerdings ein genaueres Ergebnis erzielt werden, wobei auch hier z.B. die unterschiedlichen Parameter eines Rackets berücksichtigt werden können, um ggf. eine noch genauere Justierung/Kalibrierung zu erzielen. Alle wichtigen Parameter des Rackets und Formeln, die für eine genaue Berechnung der Ballgeschwindigkeit v abhängig von der Schlägerkopfgeschwindigkeit benötigt werden, können für die Sportart Tennis z.B. von dem Fachbuch "The Physics and Technology of Tennis" von Howard Brody, Rod Cross und Crawford Lindsey (ISBN: 978-0972275903) entnommen werden.

Auch die Auswahl eines distanzabhängigen Verdunkelungszeitraums ist bei einem erfindungsgemäßen Verfahren bzw. einer erfindungsgemäßen Anordnung 100 möglich. Dabei wird z.B. unmittelbar nach dem Treffpunkt T des ersten Spielers 1 ermittelt, wie weit der erste Spieler 1 und der zweite Spieler 2 voneinander entfernt sind, um abhängig von der ermittelten Distanz die Verschlusszeit zu variieren.

Dadurch wird erreicht, dass, egal wie schnell Bälle geschlagen werden, die Verdunkelungsbrille immer nach einer vorgebbaren bzw. parametrierbaren Distanz, die der Ball bzw. das Spielobjekt 6 nach dem Treffpunkt T zurücklegt, öffnet. Der Parameter 50% für die Distanz würde bedeuten, dass die Verdunkelungsbrille bei halber Distanz zwischen dem ersten Spieler 1 und dem zweiten Spieler 2 wieder auf transparent schaltet.

Im Folgenden wird hierfür für Tennis ein Beispiel angeführt:
Parameter: Distanz: 50%,
Entfernung zwischen erstem Spieler 1 und zweitem Spieler 2 = 24m:
   Die Verdunkelungsbrille wird intransparent geschaltet, nachdem der Ball eine Distanz von 12 m zurückgelegt hat.

Funktionsweise der Distanzermittlung:
Wenn der erste Spieler 1 den Ball im Zuge der Ausführungsbewegung zum Zeitpunkt T trifft, wird unmittelbar ein Signal an die Empfangseinheit 20 des zweiten Spielers 2 via Funk mit einer Geschwindigkeit entsprechend der Lichtgeschwindigkeit, also ca. 300.000 km/s, geschickt (siehe Fig. 2).

Beim Aufprall des Balls am Tennisracket 4 entsteht des Weiteren ein typisches Geräusch in Form eines akustischen Signals G (siehe Fig. 2), das sich mit Schallgeschwindigkeit, also ca. 343 m/s, ausbreitet und von Empfangseinheit 20 mit Hilfe eines Mikrofons mit entsprechender Auswerteeinheit 26 (siehe Fig. 5) gemessen werden kann. Beide Signale (Funksignal SF und akustisches Signal G) breiten sich vom ersten Spieler 1 zum gleichen Zeitpunkt jedoch mit unterschiedlichen Geschwindigkeiten in Richtung des zweiten Spieler 2 aus. Wenn die Empfangseinheit 20 des zweiten Spielers 2 nun diese Signale unverzögert nach Ankunft einliest und den Zeitversatz ermittelt, kann mit dieser Information die Distanz zwischen den Spielern 1, 2 berechnet werden. Die Berechnung kann von der Steuereinheit 21 der Empfangseinheit 20 vorgenommen werden.

Wenn beispielsweise die Steuereinheit 21 ein akustisches Signal G um 0,1 s später empfängt als das Funksignal SF, legt das akustische Signal G in 1 s eine Strecke von 343 m in der Luft zurück. Das Funksignal SF legt in dieser Zeit eine Strecke von 300.000 km zurück. Das Funksignal SF kann als unendlich schnell angenommen werden und dient der Steuereinheit 21 als Startzeitpunkt dafür, wann das akustische Signal G vom ersten Spieler 1 erzeugt wird. Ab dieser Zeit startet ein Zeitzähler. Sobald das akustische Signal G eintrifft, wird diese Zeit gespeichert und für die Distanzberechnung verwertet. Der Zähler läuft allerdings weiter, um für die Berechnung des Zeitpunkts der Transparenzschaltung basiert auf der Formel darunter als Eingangsgröße zu dienen.

Distanzberechnung:
Gestoppte Zeit = 0,1s
Distanz = 1s / (343 m * Δt) --> 1s / (343 m * 0,1) = 34,3m

Wird ein Ball nun mit einer Geschwindigkeit von 100 km/h geschlagen und soll das Schalten auf Intransparenz bei 50% also in der Mitte zwischen den beiden Spieler 1, 2 erfolgen, sieht die weitere Berechnung folgendermaßen aus:
Berechnete Ballgeschwindigkeit = 100 km/h / 3,6 = 27,77 m/s
Halber Weg = 34,3 m /2= 17,15 m
Verdunkelungszeitraum = (1s / 27,77 m) * 17,15 m = 0,618s = 618 ms

Sobald der Zeitzähler den Wert von 618 ms erreicht, wird die Verdunkelungsbrille wieder transparent geschaltet.

Die Geschwindigkeit des Balls nimmt aufgrund des Luftwiderstands ab, was natürlich für eine genauere Berechnung berücksichtigt werden könnte. Dies wurde in der Formel darüber allerdings nicht berücksichtigt.

Die Distanzermittlung kann des Weiteren auch über externe Systeme also Distanzmessgeräten z.B. mit Hilfe von Techniken wie GPS, Radar, Lidar usw. erfolgen. Der Messwert kann daraufhin online zumindest mit 10 Hz an die Empfangseinheit 20 des zweiten Spieler 2 geschickt werden und dort der Steuereinheit 21 als Berechnungsbasis für den Verdunkelungszeitraum, d.h. den Zeitraum, in dem die Verdunkelungsbrille intransparent geschaltet ist, dienen. Dafür kann das jeweilige Messgerät mit einer weiteren Sendeeinheit 10 ausgestattet werden. Der vom Messgerät gemessene Wert kann mit einer verfügbaren Schnittstelle an die Steuereinheit 11, z.B. einen Mikrocontroller, übermittelt werden, der den Wert unverzögert via einer Sendevorrichtung 12 aussendet, um daraufhin von Empfangseinheit 20 empfangen zu werden.

Eine weitere Verbesserung in dieser Hinsicht kann durch eine Verknüpfung der Distanz- und Geschwindigkeitsfunktion erzielt werden. Schnell geschlagene Bälle aus kurzer Entfernung würden die kürzeste Verdunkelungszeit erfordern, während langsam geschlagene Bälle aus großer Entfernung die längste Verdunkelungszeit bedeuten würden. Somit wäre gewährleistet, dass abhängig von der Distanz und der Geschwindigkeit des geschlagenen Balls bzw. Spielobjekts 6 automatisch immer eine der Spielsituation angepasste Verdunkelungszeit gewählt wird, was die Effektivität des Trainings der Antizipationsfähigkeit enorm steigert.

Befindet sich die Verdunkelungsbrille in diesem Modus, sind die gleichen Parameter wie bei der geschwindigkeitsabhängigen als auch bei der distanzabhängigen Verschlusszeit beschrieben, verfügbar. Der Parameter P3=2 für die Distanz würde bedeuten, dass die Verdunkelungszeit bei halber Distanz um den Faktor 2 von der parametrierten Dauer gegeben durch die Parameter P1 und P2 reduziert wird. Als Basis wird z.B. bei Tennis der Abstand zwischen den Grundlinien herangezogen, welcher ca. 24 m beträgt. Der jeweils aktuelle Wert, der sich distanzabhängig aus der Kennlinie, welche von P1 und P2 definiert wird, ergibt, würde bei einem Abstand von 24 m (beide Spieler an der Grundlinie) also immer direkt übernommen werden, allerdings bei kürzerem Abstand kontinuierlich reduziert werden bzw. bei größerem Abstand vergrößert werden.

Im Folgenden einige Beispiele hierfür:
Parameter (P1 und P2): 100 km/h = 10 m (P1), 50 km/h = 20 m (P2), Distanz = 2 (P3)
Die Entfernung zwischen dem ersten Spieler 1 und dem zweiten Spieler 2 beträgt 24 m, der Ball wird mit 100 km/h geschlagen.

Die Verdunkelungsbrille wird wieder transparent geschaltet, nachdem der Ball eine Strecke von 10 m zurückgelegt hat.

Parameter (P1 und P2): 100 km/h = 10 m (P1), 50 km/h = 20 m (P2), Distanz = 2 (P3)
Die Entfernung zwischen dem ersten Spieler 1 und dem zweiten Spieler 2 beträgt 12 m, der Ball wird mit 100 km/h geschlagen.

Die Verdunkelungsbrille wird wieder transparent geschaltet, nachdem der Ball eine Strecke von 5 m zurückgelegt hat.

Parameter (P1 und P2): 100k m/h = 10m (P1), 50 km/h = 20 m (P2), Distanz = 4 (P3)
Die Entfernung zwischen dem ersten Spieler 1 und dem zweiten Spieler 2 beträgt 12 m, der Ball wird mit 100 km/h geschlagen.

Die Verdunkelungsbrille wird wieder transparent geschaltet, nachdem der Ball eine Strecke von 2,5 m zurückgelegt hat.

Diese Funktion kann auch für mehrere Spieler z.B. im Doppel oder Mannschaftssportarten angewandt werden, wenn jede Verdunkelungsbrille diese Funktion enthält. Bei jedem Spieler würde abhängig von der Distanz zu demjenigen Spieler, der gerade den Ball spielt, eine distanz- und/oder geschwindigkeitsabhängige Verdunkelungszeit gewählt werden, die für den jeweiligen Spieler optimal ist.

### Streaming von Daten

Dadurch, dass die Messwerte bzw. Sensordaten des Sensors bzw. der Sensoren der Sendeeinheit 10 durch eine Steuereinheit 11, z.B. einen Mikrocontroller, verarbeitet werden, ist es vorteilhafterweise nicht nur möglich, ein Steuersignal für eine Shutter-Brille 3 zu erstellen und an diese zu übermitteln, sondern optional auch die Sensordaten an eine Verarbeitungseinheit wie z.B. einen PC annähernd in Echtzeit weiterzuleiten.

### Parametrierung der Vorrichtung

Die Sendeantenne der Sendevorrichtung 12 der Sendeeinheit 10 und die Empfangsantenne 22 der Empfangseinheit 20 können optional als bidirektionale Antennen ausgestaltet sein, sodass z.B. auch eingegebenen Parameter etc. von z.B. einem Smartphone 30 an die Sendeeinheit 10 übermittelt werden können. Zusätzlich können auch verschiedenste Programme bzw. unterschiedliche Modi (siehe Tabelle 1) für die Detektion der Ausführungsbewegung mittels Eingabe an einem Smartphone 30 gewählt und entsprechend an die Sendeeinheit 10 und/oder Empfangseinheit 20 übermittelt werden, wo die gewählten Optionen entsprechend von der Steuereinheit 11 bzw. der weiteren Steuereinheit 21 ausgeführt werden.

**Tabelle 1: Mögliche Programme bzw. Modi für die Detektion der Ausführungsbewegung und intransparent Schaltung der Verdunkelungsbrille**

| Programm | Beschreibung |
|---|---|
| Programm 1 | Beim Empfang des Steuersignals schließen beide Brillengläser der Shutter-Brille 3 gleichzeitig für eine definierbare Zeit. Zeitpunkt für Steuersignal kann gewählt werden. Treffpunkt T und, wenn gewünscht, eine Verzögerungszeit. |
| Programm 2 | Distanzabhängige oder geschwindigkeitsabhängige Wahl des Verdunkelungszeitraums. |
| Programm 3 | Beim Empfang des Signals wird das linke Brillenglas der Shutter-Brille 3 geschlossen und das rechte Brillenglas geöffnet. Beim nächsten Empfang des Signals wird das rechte Brillenglas geschlossen und das linke Brillenglas geöffnet usw. |
| Programm 4 | Die Brillengläser öffnen und schließen in einer definierbaren Frequenz à Stroboskopeffekt. Die Öffnungs- und Verschlusszeit kann definiert werden. |
| Programm 5 | Es ist nur das linke Brillenglas geöffnet. |
| Programm 6 | Es ist nur das rechte Brillenglas geöffnet. |
| Programm 7 | Der Trainer schließt die Brillengläser via Druckknopf. Solange der Trainer den Knopf gedrückt hält, bleibt die Shutter-Brille 3 intransparent bzw. geschlossen. |
| Programm 8 | Der Trainer schließt die Shutter-Brille 3 via Druckknopf. Verschlusszeit laut App. |
| Programm 9 | Streaming Mode: Daten von Beschleunigungs- und Lagesensor werden auf Notebook gestreamt. Daten können per Programm ausgewertet werden. |
| Programm 10 | Reaction Mode: Shutter-Brille 3 schließt bei Ausholbewegung und öffnet bei Treffpunkt T. |

Durch ein erfindungsgemäßes Verfahren bzw. eine erfindungsgemäße Anordnung 100 ist es einem zu trainierenden Sportler vorteilhafterweise möglich, seine Antizipationsfähigkeit innerhalb kürzester Zeit zu verbessern. Um wenig trainierte Spieler nicht zu überfordern, können, wie bereits zuvor erwähnt, verschiedene Optionen gewählt werden, wie die Ausführungsbewegung detektiert wird, bzw. wann die Shutter-Brille 3 verschlossen wird. Das Verschließen kann z.B. im Tennis für Anfänger etwa kurz nach dem Treffpunkt T erfolgen und für bereits trainierte Sportler zum Zeitpunkt des Treffpunkts T. Durch diese Skalierbarkeit kann sich der Sportler durch Vorverlagerung des Verschlusszeitpunktes über die Zeit immer weiter steigern.

Bei regelmäßigem Training mit einer erfindungsgemäßen Anordnung 100 kann so das Spielniveau eines Spielers bzw. einer ganzen Mannschaft deutlich gesteigert werden, da die Flugbahn zu spielender Spielobjekte 6 besser vorhergesehen werden und die Spielobjekte somit auch früher erreicht werden können. Somit bleibt auch mehr Zeit für die Schlagausführung und die Schlagdurchführung kann sauberer und mit dem richtigen Timing durchgeführt werden, sodass es zu weniger Spielfehlern kommt.

Mit Hilfe der Erfindung ist es daher möglich, die Antizipation der Flugbahn von Spielobjekten 6 effektiv, einfach, skalierbar und in der jeweiligen Sportart zu trainieren, wobei eine erfindungsgemäße Anordnung 100 für jedes Spielerniveau und Spieleralter geeignet ist.

Im Folgenden werden weitere **Ausführungsbeispiele** eines erfindungsgemäßen Trainingsverfahrens bzw. einer erfindungsgemäßen Anordnung 100 erläutert, bei denen eine **Virtual-Reality-Brille** als Verdunkelungsbrille zum Einsatz kommt:
Beim Training mit einer Shutter-Brille 3 sieht der zu trainierende zweite Spieler 2 bei seiner Bewegung zum Spielobjekt 6 kurzzeitig nichts, da die Shutter-Brille 3 im gesamten Bereich des Brillenglases komplett intransparent geschaltet ist. In diesem Zusammenhang kann es jedoch wünschenswert sein, dass der zweite Spieler 2 alles bis auf das Spielobjekt 6 sehen kann.

Mit einer Virtual-Reality-Brille, die eine Vermischung einer physischen Umgebung mit einer virtuellen Umgebung ermöglicht, ist es realisierbar, dass nur ein Teil des Displays der Virtual-Reality-Brille intransparent geschalten wird bzw. durch ein virtuelles Bild ersetzt wird. Ziel in diesem Zusammenhang kann es daher einerseits sein, dass der zweite Spieler 2 seine Umgebung durch die Virtual-Reality-Brille hindurch sieht und lediglich ein kleiner Teil des Sichtfeldes definiert durch den Bereich des Spielobjekts 6 und/oder ein zusätzlicher Bereich um das Spielobjekt 6, der die möglichen Flugbahnen abbildet, intransparent geschalten wird bzw. durch ein virtuelles Bild ergänzt wird.

Anstatt einer Virtual-Reality-Brille wie oben beschrieben ist es auch möglich HMD's (Head Mounted Displays) mit Videos See-through zu verwenden. Im Zusammenhang mit der Erfindung wird daher unter einer Virtual-Reality-Brille auch ein Head Mounted Display verstanden. Bei dieser Technologie ist es nicht möglich, durch das Display hindurchzusehen, sondern es wird eine Bildaufnahme, die von einer oder mehreren Bildaufnahmeeinheiten wie Kameras, die auf dem Head Mounted Display angebracht sind, erstellt und auf das Head Mounted Display in 3D projiziert.

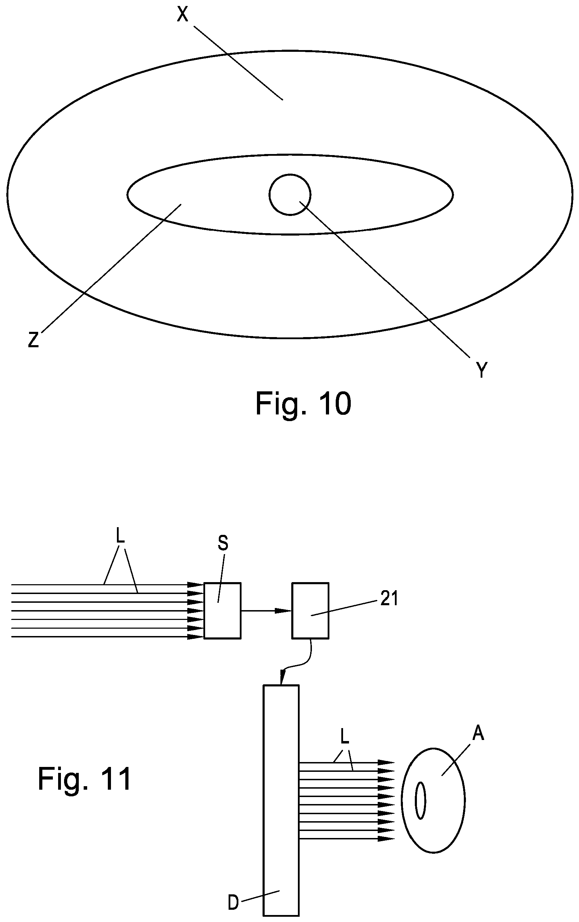

Die Steuereinheit 21 wird mit dem Controller der Virtual-Reality-Brille gekoppelt und kann das Spielobjekt 6 mit Hilfe eines Befehls jederzeit ausblenden oder ausgrauen. Dies ist schematisch in Fig. 11 dargestellt. In Fig. 11 trifft einfallendes Licht L auf einen optischen Sensor S. Die Sensormessdaten des optischen Sensors S werden an die Steuereinheit 21 übermittelt, die auf den Sensormessdaten ein Bild für die Virtual-Reality-Brille erstellt und das Display D der Virtual-Reality-Brille entsprechend ansteuert, das Bild wiederzugeben. Dieses Bild wird, schematisch angedeutet als auf des Auge A des zweiten Spielers 2 einfallendes Licht L gelangt.

Diese Technologie hat den Vorteil, dass virtuelle Objekte sehr einfach auf dem Display D eingespielt werden können, die bei dieser Anwendung das Spielobjekt 6 ersetzen können. Bei Empfang des Steuersignals kann entweder das ganze Display D oder, wie zuvor beschrieben, nur ein definierter Bereich abdunkeln bzw. intransparent schalten,

Beide Varianten können vorteilhafterweise verzögerungsfrei, also annähernd in Echtzeit (z.B. mit mind. 100Hz), erfolgen und virtuelle und reale Objekte können dreidimensional zueinander in Bezug stehen.

Alle zuvor beschriebenen Ausführungsbeispiele eines erfindungsgemäßen Trainingsverfahrens und einer erfindungsgemäßen Anordnung 100 sind bei Verwendung einer Virtual-Reality-Brille vorteilhafterweise unverändert anwendbar. Die Virtual-Reality-Brille wird bei Vorliegen eines entsprechenden Steuersignals dahingehend intransparent geschaltet, dass das Spielobjekt 6 für den zu trainierenden zweiten Spieler 2 nicht sichtbar, sondern z.B. durch ein virtuelles Bild oder abgedunkelten Bereich ersetzt wird. Da der zweite Spieler 2 derart seine Umgebung wahrnehmen kann, wird vermieden, dass der zweite Spieler 2 von einer kompletten kurzzeitigen Intransparenz irritiert werden könnte und kann sich sicherer bewegen da er die Spieler aus dem Augenwinkel noch wahrnehmen kann. Speziell im Fußball, wo Körperkontakt stattfindet, kann dies vorteilhaft sein, um ungewollte Zusammenstöße mit gegnerischen Spielern zu vermeiden.

Im Folgenden wird die Funktion anhand eines Ausführungsbeispiels beschrieben, bei dem der zweite Spieler 2 seine Umgebung durch die Virtual-Reality-Brille hindurch sieht und anstatt des Spielobjekts 6 eine Überblendung des Spielobjekts 6 erfolgt bzw. dieses virtuell ersetzt wird:
Im Ausführungsbeispiel wird eine Empfangseinheit 20 an der Virtual-Reality-Brille montiert bzw. integriert. Die Steuereinheit 21 wird mit einer verfügbaren hochfrequenten Schnittstelle mit z.B. mind. 200 Hz bis 1 kHz mit der Virtual-Reality-Brille verbunden, um das Display der Virtual-Reality-Brille entsprechend anzusteuern und eine derartige Überblendung des Spielobjekts 6 zu ermöglichen. Die Steuereinheit 21 der Virtual-Reality-Brille ist demensprechend programmiert. Selbstverständlich ist es auch möglich, dass die Steuereinheit 21 mit einer entsprechenden getrennten Steuereinheit, die das Display der Virtual-Reality-Brille ansteuert, kommunizieren kann, und diese getrennte Steuereinheit dazu veranlasst, das Display der Virtual-Reality-Brille intransparent zu schalten.

Es ist bei einer erfindungsgemäßen Anordnung 100 auch möglich, eine bestehende Virtual-Reality-Brille umzurüsten: In diesem Fall kann eine Empfangseinheit 20 an der Virtual-Reality-Brille montiert bzw. integriert werden. Eine bereits in der Virtual-Reality-Brille integrierte Steuereinheit kann in diesem Fall als Steuereinheit für die Virtual-Reality Brille fungieren und bei Empfang eines Steuersignals die Virtual-Reality-Brille für einen definierten Bereich verdunkeln bzw. intransparent schalten oder auch ein virtuelles Bild auf das Display projizieren bzw. auf See-through schalten. Die Steuereinheit 21 der Empfangseinheit 20 kann über eine hochfrequente Schnittstelle mit z.B. mind. 200 Hz bis 1 kHz mit der bestehenden Steuereinheit der Virtual-Reality-Brille kommunizieren, um das Display der Virtual-Reality-Brille entsprechend anzusteuern und eine derartige Überblendung des Spielobjekts 6 zu ermöglichen. Eine weitere Variante besteht darin, die Empfangseinheit 20 komplett in eine bestehende Steuereinheit der Virtual-Reality-Brille zu integrieren.

Eine Sendeeinheit 10, wie sie zuvor im Zusammenhang mit der Shutter-Brille 3 beschrieben wurde, kann unverändert eingesetzt und wie gewohnt, z.B. auf einem Tennisracket 4 installiert werden.

Auch der Ablauf eines erfindungsgemäßen Trainingsverfahrens kann unverändert bleiben: Während sich der erste Spieler 1 in der Schlagdurchführung befindet, sieht der zweite Spieler 2 die gesamte Umgebung und somit die Schlagdurchführung des ersten Spielers 1 sowie das Spielobjekt 6 real. Sobald eine Ausführungsbewegung, mit der das Spielobjekt 6 auf seine Flugbahn befördert wird, mittels eines oder mehrerer Sensoren detektiert wird z.B. ab dem Zeitpunkt z.B., wenn der erste Spieler 1 das Spielobjekt 6 trifft, wird das Spielobjekt 6 für eine vorgegebene Zeit ausgeblendet und anstatt des Spielobjekts 6 ein virtuelles oder ausgegrautes Bild für den zweiten Spieler 2 eingespielt.

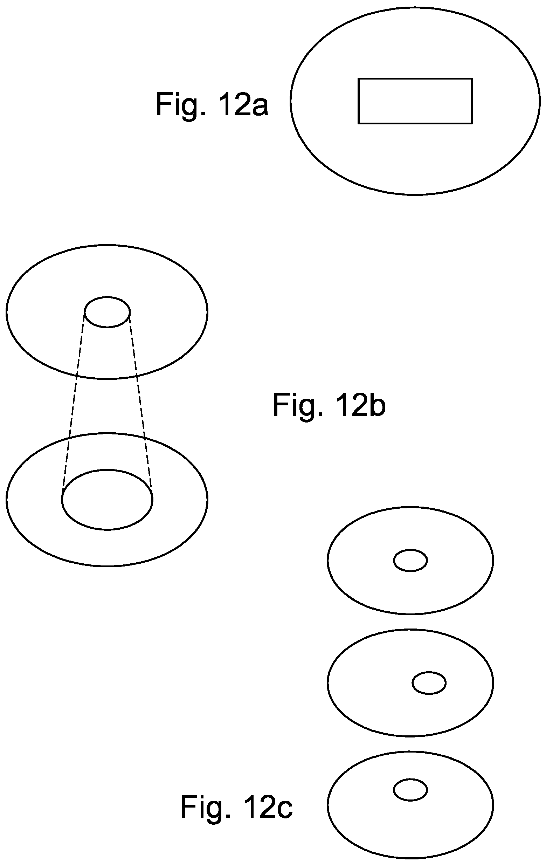

Für das Ersetzen des Spielobjekts 6 mit einem Bild sind mehrere Varianten denkbar:
Wenn Sportler einen Ball mit den Augen fokussieren, ist der Kopf des Sportlers und folge dessen auch die getragene Virtual-Reality-Brille immer in Richtung des zu beobachtenden Spielobjekts 6 ausgerichtet. Dies hat wiederum zur Folge, dass die Lichtstrahlen, die vom Spielobjekt 6 durch die Virtual-Reality-Brille und in das menschliche Auge gelangen, immer annähernd genau im gleichen Bereich des Brillenglases die Virtual-Reality-Brille durchdringen. Dies hat den Vorteil, dass der Bereich, der bei Eintreffen des Steuersignals intransparent geschalten wird, gut definiert werden kann. Die Größe, aber auch die Form (z.B. Kreis, Oval oder Rechteck, siehe Fig. 12a), dieses Bereiches kann durch Parametrierung definiert werden ebenso wie die horizontale und vertikale Position des Bereiches am Brillenglas (siehe Fig. 12c).

Eine zweite Möglichkeit ist, dass dieser Bereich bei Empfang des Steuersignals sehr klein ist, um nur in etwa das Spielobjekt 6 selbst auszublenden und sich bis zu dem Zeitpunkt, zu dem die Virtual-Reality-Brille wieder komplett transparent geschalten wird, kontinuierlich vergrößert, um auch mögliche Flugbahnen des Spielobjekts 6 für den Spieler nicht ersichtlich zu machen. Hierfür sind zwei Arten der Parametrierung denkbar: Entweder können eine Anfangsgröße und eine Endgröße des Bereichs definiert werden, oder eine Anfangsgröße und ein Faktor der Vergrößerung pro Zeiteinheit oder pro Verdunkelungsphase (siehe Fig. 12b).

Mit dem Modus der Distanzerkennung kann die Größe des Bereichs auch dementsprechend automatisch angepasst werden. Je näher das Spielobjekt 6 ist, desto größer kann der Bereich gewählt werden, da das Spielobjekt 6 auch größer erscheint.

Um besonders effektiv sicherzustellen, dass der zweite Spieler 2 die Flugbahn des Spielobjekts 6 nicht nachvollziehen kann, kann optional zusätzlich zum Bereich des Spielobjekts 6 auch der Bildbereich möglicher Flugbahnen extrapoliert und durch ein virtuelles Bild ersetzt oder mit weniger Auflösung aufgefüllt werden, wie dies in Fig. 10 schematisch dargestellt ist:
So wird für den zweiten Spieler 2 einerseits ein Bildbereich X dargestellt (siehe Fig. 10), der seine physische Umgebung in Blickrichtung zeigt. Zusätzlich zu Bereich Y, der das Spielobjekt 6 darstellt, kann optional ein vorgebbarer Bereich Z um das Spielobjekt 6, der den Bildbereich möglicher Flugbahnen des Spielobjekts 6 darstellt, berechnet und ebenfalls durch ein virtuelles Bild ersetzt werden.

Im Folgenden wird ein weiteres **Ausführungsbeispiel** eines erfindungsgemäßen Trainingsverfahrens bzw. einer erfindungsgemäßen Anordnung 100 erläutert, bei dem die Detektion der Ausführungsbewegung mit zumindest einem, in einem Spielobjekt 6 angeordneten, Sensor erfolgt:
Zum Training der Antizipationsfähigkeit können der Sensor bzw. die gesamte Sendeeinheit 10 anstatt, wie zuvor beschrieben, im Racket auch direkt in einem Spielobjekt 6, beispielsweise einem Ball, eingebaut werden. Bei einem Aufprall des Balls auf dem Racket (z.B. beim Tennis) oder einem Fuß (z.B. beim Fußball) des ersten Spielers 1 wird dies durch die Sensorik erkannt und die Sendeeinheit 10 sendet ein Steuersignal. Dieses Steuersignal wird von der Empfangseinheit 20 des zweiten Spielers 2 empfangen und dessen Verdunkelungsbrille wird für eine bestimmte Zeit verdunkelt. Der zweite Spieler 2 kann nun versuchen, die Flugbahn des Balls zu erahnen. Ein derartiges Verfahren bzw. eine derartige Anordnung 100 ist auch für Mannschaftssportarten geeignet, da das Steuersignal gleichzeitig von mehreren Spielern bzw. deren Empfangseinheiten 20 empfangen werden kann.

Der Treffpunkt, bzw. der Zeitpunkt des Kontakts, an dem der Ball auf einem Racket oder Fuß aufprallt, wird durch die dabei entstehenden Vibrationen und/oder die Richtungsänderung des Balls charakterisiert und kann so z.B. von einem im Ball angeordneten Beschleunigungssensor und/oder einem Gyroskopsensor und/oder einem Magnetometer erkannt werden, sodass ein dementsprechendes Steuersignal generiert werden kann.

So ist es möglich, dass die Verdunkelungsbrille des zweiten Spielers 2 bei Detektion eines Treffpunkts, d.h. des Kontakts des Balls mit dem Racket, oder auch z.B. einem Fuß oder einer Hand eines Spielers, verdunkelt wird, da beim Aufprall des Balls am Racket oder z.B. dem Fuß Vibrationen entstehen, die durch z.B. einen Beschleunigungssensor erfasst werden können. Somit ist eine zuverlässige Detektion der Ausführungsbewegung in Form eines Treffpunkts bereits mit einzig mit einem Beschleunigungssensor möglich, der die auftretenden Vibrationen als Beschleunigungswerte erfasst, anhand deren der Treffpunkt abgeleitet werden kann. Die Unterscheidung, ob der Ball auf einem Racket auftrifft, oder z.B. auf dem Boden, kann anhand der Sensordaten z.B. mit Hilfe eines Auswertealgorithmus berechnet werden.

Eine Sensorik umfassend einen Beschleunigungssensor, einen Gyroskopsensor und ein Magnetometer bzw. eine Sendeeinheit 10 in Kombination mit Auswertealgorithmen bieten außerdem die Möglichkeit, bestimmte Parameter der Ballflugbahn wie z.B. Beschleunigung, Drall und Geschwindigkeit zu berechnen.

Ist die Sendeeinheit 10 in einem Ball installiert, können z.B. die oben genannten berechneten Daten auch online (d.h. laufend) und mit parametrierbarer Frequenz der Empfangseinheit 20, aber auch anderen externen Geräten mit geeignetem Interface zur Datenanalyse zur Verfügung gestellt werden.

Vorzugsweise sind der Sensor bzw. die Sensoren und/oder die gesamte Sendeeinheit 10 robust und sehr klein, weisen ein äußerst geringes Gewicht von <5 g auf und enthalten eine eigenständige Energieversorgung, sodass es möglich ist, den Sensor direkt im Ball zu installieren. Die Anschlussstellen des im Ball eingebauten Akkus sind für Ladetätigkeiten von außen zugänglich bzw. kann das Laden auch über eine induktive kontaktlose Lösung von außen erfolgen.

Die Anordnung der Sensorik oder der gesamten Sendeeinheit 10 kann an der inneren Oberfläche des Balls erfolgen oder auch geschützt und zentral im Ball und über elastische Elemente mit der Oberfläche im Ballinneren gestützt werden. Alternativ kann der Sensor bzw. die Sensoren und/oder die gesamte Sendeeinheit 10 zumindest teilweise auch am Spielobjekt zB an der Außenseite angeordnet sein.

## Patentansprüche

1. Verfahren zum Training der Antizipation der Flugbahn eines Spielobjekts (6), insbesondere eines Balls, für zumindest zwei Spieler,
- wobei ein erster Spieler (1) das Spielobjekt (6) mittels einer Ausführungsbewegung zu einem zu trainierenden zweiten Spieler (2) befördert, insbesondere schlägt,
- wobei der zweite Spieler (2) eine Verdunkelungsbrille, insbesondere eine Shutter-Brille (3) oder Virtual-Reality-Brille, trägt, die dazu ausgebildet ist, insbesondere bei Vorliegen eines Steuersignals, transparent oder intransparent zu schalten,
- wobei eine Ausführungsbewegung des ersten Spielers (1) detektiert wird, mit der das Spielobjekt (6) auf seine Flugbahn gebracht wird,
- wobei ein Sensor zur Anordnung an oder in einem Schlaggerät, insbesondere einem Racket oder Schläger, oder einer Vorrichtung zur Anordnung am Körper eines Spielers, insbesondere einem Fußballschuh oder einer Manschette, oder zur Anordnung in oder an einem Spielobjekt (6), insbesondere einem Ball, vorgesehen ist,
- wobei der Sensor dazu ausgebildet ist, den Kontakt mit dem Spielobjekt (6) während einer Ausführungsbewegung zu detektieren,
- wobei aufgrund dieser Detektion die Verdunkelungsbrille im Zuge der Ausführungsbewegung aufgrund eines von einer Steuereinheit (11) erstellten Steuersignals für eine bestimmte Zeit intransparent geschaltet wird, wobei die Steuereinheit (11) dazu ausgebildet ist, bei Detektion des Kontakts mit dem Spielobjekt (6) durch den Sensor ein Steuersignal für die Verdunkelungsbrille zu erstellen,
- sodass zumindest ein Teil der Ausführungsbewegung vor dem Kontakt mit dem Spielobjekt (6) für den zweiten Spieler (2) sichtbar ist und
- sodass nach dem letzten Kontakt mit dem Spielobjekt (6) im Rahmen der Ausführungsbewegung dieses Spielobjekt (6) für den zweiten Spieler (2) für einen vorgegebenen Zeitraum nicht sichtbar ist,
**dadurch gekennzeichnet,**
- **dass** der Kontakt mit dem Spielobjekt (6) während der Ausführungsbewegung detektiert wird und dass die Verdunkelungsbrille jeweils aufgrund des detektierten Kontakts mit dem Spielobjekt (6) intransparent geschaltet wird und
- **dass** die Verdunkelungsbrille maximal 100 ms nach dem detektierten Kontakt mit dem Spielobjekt (6) intransparent geschaltet wird.

2. Verfahren nach Anspruch 1, **dadurch gekennzeichnet,**
- **dass** der erste Spieler (1) und der zweite Spieler (2) jeweils eine Verdunkelungsbrille tragen,
- **dass** beim ersten Spieler (1) und beim zweiten Spieler (2) jeweils Ausführungsbewegungen detektiert werden, und
- **dass** bei Detektion einer Ausführungsbewegung die Verdunkelungsbrille des ersten Spielers (1) und die Verdunkelungsbrille des zweiten Spielers (2) jeweils wechselseitig intransparent geschaltet werden.

3. Verfahren nach Anspruch 1 oder 2, **dadurch gekennzeichnet,**
- **dass** zwei Teams mit jeweils mehreren Spielern vorgesehen sind und alle Spieler des ersten Teams und alle Spieler des zweiten Teams jeweils eine Verdunkelungsbrille tragen,
- **dass** bei allen Spielern jeweils Ausführungsbewegungen detektiert werden, und
- **dass** bei Detektion einer Ausführungsbewegung
- die Verdunkelungsbrillen der Spieler des ersten Teams und die Verdunkelungsbrillen der Spieler des zweiten Teams jeweils wechselseitig intransparent geschaltet werden oder
- die Verdunkelungsbrillen aller Spieler außer der Verdunkelungsbrille desjenigen Spielers, der die Ausführungsbewegung durchführt, intransparent geschalten werden.

4. Verfahren nach einem der vorangehenden Ansprüche, **dadurch gekennzeichnet,**
- **dass** nur eine Brillenseite der Verdunkelungsbrille intransparent geschaltet wird und/oder
- **dass** die rechte und die linke Brillenseite abwechselnd intransparent geschaltet werden und/oder
- **dass** die rechte und/oder die linke Brillenseite mit einer vorgegebenen Frequenz, insbesondere in Form von Blinken, transparent und wieder intransparent geschaltet wird, und/oder
- **dass** die Verdunkelungsbrille unmittelbar nach, vorzugsweise 4 bis 9 ms nach, besonders vorzugsweise 5 ms nach, dem detektierten Kontakt mit dem Spielobjekt (6) intransparent geschaltet wird.

5. Verfahren nach einem der vorangehenden Ansprüche, **dadurch gekennzeichnet,**
- **dass** die Geschwindigkeit des Spielobjekts (6) nachdem es auf seine Flugbahn gebracht wurde, insbesondere die Geschwindigkeit des Spielobjekts (6) nach dem Kontakt mit einem Schlaggerät, insbesondere einem Racket oder Schläger, ermittelt wird, und dass die Dauer des Zeitraums, in dem die Verdunkelungsbrille intransparent geschaltet ist, insbesondere automatisch, in Abhängigkeit von der ermittelten Geschwindigkeit des Spielobjekts (6) gewählt wird, und/oder
- **dass** die Distanz zwischen dem ersten Spieler (1) und dem zweiten Spieler (2) ermittelt wird und dass die Dauer des Zeitraums, in dem die Verdunkelungsbrille intransparent geschaltet ist, insbesondere automatisch, in Abhängigkeit von der ermittelten Distanz gewählt wird, und/oder
- **dass** die Dauer des Zeitraums, in dem die Verdunkelungsbrille intransparent geschaltet ist, 50 ms bis 3 s, insbesondere 50 ms bis 1 s, vorzugsweise 50 ms bis 300 ms, beträgt, und/oder
- **dass** bei Detektion der Ausführungsbewegung die Verdunkelungsbrille für eine bestimmte Zeit derart intransparent geschaltet wird, dass das Spielobjekt (6) nach dem letzten Kontakt mit dem Spielobjekt (6) im Rahmen der Ausführungsbewegung für den zweiten Spieler (2) durch ein virtuelles Bild ersetzt wird.

6. Verfahren nach einem der vorangehenden Ansprüche, **dadurch gekennzeichnet, dass** die Verdunkelungsbrille spätestens, wenn eine Ausführungsbewegung des zweiten Spielers (2) detektiert wird, wieder transparent geschaltet wird,
wobei insbesondere vorgesehen ist, dass die Verdunkelungsbrille transparent geschaltet wird,
- nachdem der zweite Spieler (2) das Spielobjekt (6) getroffen hat, vorzugsweise nachdem das Spielobjekt (6) von einem Schlaggerät, insbesondere einem Racket oder Schläger, des zweiten Spielers (2) getroffen wurde, und/oder
- wenn das Schlaggerät, insbesondere das Racket oder der Schläger, des zweiten Spielers im Zuge der Ausführungsbewegung einen Umkehrpunkt (U) überschreitet.

7. Verfahren nach einem der vorangehenden Ansprüche, **dadurch gekennzeichnet,**
**dass** die Detektion der Ausführungsbewegung und/oder des Kontakts mit dem Spielobjekt (6) mittels eines Beschleunigungssensors (5) vorgenommen wird, und/oder
- **dass** die Detektion der Ausführungsbewegung und/oder des Kontakts mit dem Spielobjekt (6) mittels eines Lagesensors, insbesondere eines Gyroskopsensors (7) und/oder eines Magnetfeldsensors, vorgenommen wird,
wobei insbesondere vorgesehen sein kann, dass die Messwerte des Beschleunigungssensors (5), des Gyroskopsensors (7) und des Magnetfeldsensors gemeinsam für die Detektion der Ausführungsbewegung und/oder des Kontakts mit dem Spielobjekt (6) herangezogen werden.

8. Verfahren nach Anspruch 7, **dadurch gekennzeichnet, dass** die Ausführungsbewegung mit einem Schlaggerät, insbesondere einem Racket, vorzugsweise einem Tennisracket (4) oder Badmintonracket oder Tischtennisschläger, oder einem Schläger, vorzugsweise einem Eishockeyschläger, durchgeführt wird und dass die Verdunkelungsbrille intransparent geschaltet wird,
- wenn die gemessene Beschleunigung (a) des Schlägerkopfs des Schlaggeräts, insbesondere des Rackets oder Schlägers, einen vorgegebenen Beschleunigungsschwellenwert (B), insbesondere von 120 m/s², übersteigt und/oder
- wenn die, insbesondere berechnete, Schlägerkopfgeschwindigkeit des Schlaggeräts, insbesondere des Rackets oder Schlägers, einen vorgegebenen Geschwindigkeitsschwellenwert, insbesondere von 20 m/s, übersteigt und/oder
- wenn das Schlaggerät, insbesondere das Racket oder der Schläger, im Zuge der Ausführungsbewegung eine vorgegebene Lage erreicht, insbesondere wenn das Schlaggerät, insbesondere das Racket oder der Schläger, einen Umkehrpunkt (U) überschreitet und/oder
- wenn die im Zuge der Ausführungsbewegung beim Kontakt des Schlaggeräts, insbesondere des Rackets oder Schlägers, mit dem Spielobjekt (6) auftretenden Vibrationen einen vorgegebenen Schwellenwert überschreiten und/oder
- wenn die Ableitung nach der Zeit der beim Kontakt des Schlaggeräts, insbesondere des Rackets oder Schlägers, mit dem Spielobjekt (6) am Treffpunkt (T) gemessenen Beschleunigung (a) des Schlaggeräts, insbesondere des Rackets oder Schlägers, einen vorgegebenen Schwellenwert (t₀), insbesondere von 2000, überschreitet.

9. Anordnung (100) zur Durchführung des Verfahrens nach einem der Ansprüche 1 bis 8 bzw. zum Training der Antizipation der Flugbahn eines Spielobjekts (6), insbesondere eines Balls, umfassend
- zumindest einen Sensor
∘ zur Anordnung an oder in einem Schlaggerät, insbesondere einem Racket oder Schläger, oder einer Vorrichtung zur Anordnung am Körper eines Spielers, insbesondere einem Fußballschuh oder einer Manschette, oder
∘ zur Anordnung in oder an einem Spielobjekt (6), insbesondere einem Ball,
oder
zumindest
- ein Schlaggerät,
insbesondere ein Racket, vorzugsweise ein Tennisracket (4) oder ein Badmintonracket oder einen Tischtennisschläger, oder ein Schläger, vorzugsweise ein Eishockeyschläger, mit einem darauf oder darin angeordneten Sensor, oder
- eine Vorrichtung zur Anordnung am Körper eines Spielers, insbesondere einen Fußballschuh oder eine Manschette,
mit einem darauf oder darin angeordneten Sensor,
und/oder
zumindest ein Spielobjekt (6), insbesondere ein Ball, mit einem darin oder daran angeordneten Sensor,
wobei der Sensor dazu ausgebildet ist, den Kontakt mit dem Spielobjekt (6) während einer Ausführungsbewegung, insbesondere mit dem Schlaggerät, vorzugsweise mit dem Racket oder dem Schläger, besonders vorzugsweise mit der das Spielobjekt (6) auf seine Flugbahn gebracht wird, zu detektieren,
- zumindest eine Verdunkelungsbrille, insbesondere eine Shutter-Brille (3) oder Virtual-Reality-Brille, die dazu ausgebildet ist, bei Vorliegen eines Steuersignals transparent oder intransparent zu schalten, und
- zumindest eine Steuereinheit (11), die dazu ausgebildet ist, insbesondere nach einem Verfahren gemäß einem der Ansprüche 1 bis 8, bei Detektion des Kontakts mit dem Spielobjekt (6) durch den Sensor ein Steuersignal für die Verdunkelungsbrille zu erstellen, um die Verdunkelungsbrille maximal 100 ms nach dem detektierten Kontakt mit dem Spielobjekt (6) intransparent zu schalten.

10. Anordnung (100) nach Anspruch 9 **dadurch gekennzeichnet, dass**
- die Anordnung (100) eine Verdunkelungsbrille in Form einer Virtual-Reality-Brille umfasst, die dazu ausgebildet ist, bei Vorliegen eines Steuersignals transparent oder intransparent zu schalten, und
- dass die zumindest eine Steuereinheit (11), oder gegebenenfalls eine weitere Steuereinheit (21), dazu ausgebildet ist, bei Vorliegen eines entsprechenden Steuersignals die Verdunkelungsbrille derart intransparent zu schalten, dass das Spielobjekt (6) nach dem letzten Kontakt mit dem Spielobjekt (6) im Rahmen der Ausführungsbewegung durch ein virtuelles Bild ersetzt wird, insbesondere nach dem letzten Kontakt des Spielobjekts (6) mit einem Schlaggerät, insbesondere einem Racket oder Schläger, oder einer Vorrichtung zur Anordnung am Körper eines Spielers, oder einem Körperteil eines Spielers.

11. Anordnung (100) nach einem der Ansprüche 9 oder 10, **dadurch gekennzeichnet, dass** der Sensor als Beschleunigungssensor (5) ausgebildet ist, wobei insbesondere vorgesehen ist, dass der Beschleunigungssensor (5) am Griff des Schlaggeräts, insbesondere des Rackets oder Schlägers, vorzugsweise im Bereich des Griffendes des Schlaggeräts, angeordnet ist.

12. Anordnung (100) nach einem der Ansprüche 9, 10 oder 11, **dadurch gekennzeichnet, dass** der Sensor als Lagesensor, insbesondere als Magnetfeldsensor und/oder Gyroskopsensor (7), ausgebildet ist oder dass ein weiterer als Lagesensor ausgebildeter Sensor am Schlaggerät, insbesondere am Racket oder am Schläger, angeordnet ist, wobei insbesondere vorgesehen ist, dass der Lagesensor oder der weitere Sensor am Griff des Schlaggeräts, insbesondere des Rackets oder Schlägers,, vorzugsweise im Bereich des Griffendes des Schlaggeräts, angeordnet ist.

13. Anordnung (100) nach einem der Ansprüche 9 bis 12, **dadurch gekennzeichnet,**
**dass** der Sensor, die Steuereinheit (11), und eine Sendevorrichtung (12) in einer Sendeeinheit (10) umfasst sind,
∘ wobei die Sendeeinheit (10) zur Anordnung an einem Schlaggerät, insbesondere einem Racket, vorzugsweise einem Tennisracket, einem Badmintonracket oder einem Tischtennisschläger, oder einem Schläger, vorzugsweise einem Eishockeyschläger, oder an einer Vorrichtung zur Anordnung am Körper eines Spielers, insbesondere einem Fußballschuh oder einer Manschette, oder in oder an einem Spielobjekt (6), insbesondere einem Ball, ausgebildet ist und
∘ wobei die Sendevorrichtung (12) dazu ausgebildet ist, die von der Steuereinheit (11) erstellten Steuersignale, insbesondere mittels Funk, zu übertragen.

14. Anordnung (100) nach einem der Ansprüche 9 bis 13, **gekennzeichnet durch**
eine Empfangseinheit (20), wobei die Empfangseinheit (20) zur Anordnung an der Verdunkelungsbrille, insbesondere an der Shutter-Brille (3) oder Virtual-Reality-Brille, ausgebildet ist, umfassend
- eine Empfangsvorrichtung (22), die dazu ausgebildet ist, an die Verdunkelungsbrille übermittelte Steuersignale zu empfangen, und
- eine weitere Steuereinheit (21), die dazu ausgebildet ist, basierend auf den von der Empfangsvorrichtung (22) empfangenen Steuersignalen die Verdunkelungsbrille anzusteuern, transparent oder intransparent zu schalten.

15. Anordnung (100) nach Anspruch 14, **dadurch gekennzeichnet, dass** die weitere Steuereinheit (21) dazu ausgebildet ist,
- die Dauer des Zeitraums, in dem die Verdunkelungsbrille intransparent geschaltet ist, in Abhängigkeit von der Geschwindigkeit des Spielobjekts (6) nachdem es auf seine Flugbahn gebracht wurde, insbesondere der Geschwindigkeit des Spielobjekts (6) nach dem Kontakt mit einem Schlaggerät, insbesondere einem Racket oder Schläger, vorzugeben und/oder
- die Dauer des Zeitraums, in dem die Verdunkelungsbrille intransparent geschaltet ist, in Abhängigkeit von der Distanz zwischen dem ersten Spieler (1) und dem zweiten Spieler (2) vorzugeben.

## Claims

1. Method for training the anticipation of the trajectory of a play object (6), in particular a ball, for at least two players,
- wherein a first player (1) uses an execution movement to move, in particular hit, the play object (6) to a second player (2) to be trained,
- wherein the second player (2) wears blackout goggles, in particular shutter goggles (3) or virtual reality goggles, which are configured to switch to a transparent or non-transparent state, in particular when a control signal is present,
- wherein an execution movement by the first player (1), which is used to move the play object (6) onto its trajectory, is detected,
- wherein a sensor is provided for arrangement on or in an item of hitting equipment, in particular a racket or bat, or a device for arrangement on the body of a player, in particular a football boot or a cuff, or for arrangement in or on a play object (6), in particular a ball,
- wherein the sensor is configured to detect contact with the play object (6) during an execution movement,
- wherein on the basis of this detection the blackout goggles are switched to a non-transparent state for a particular period of time during the course of the execution movement on the basis of a control signal generated by a controller (11), wherein the controller (11) is configured to generate a control signal for the blackout goggles on detection of contact with the play object (6) by the sensor,
- so that at least part of the execution movement is visible to the second player (2) before contact with the play object (6) and
- so that after the last contact with the play object (6) as part of the execution movement this play object (6) is not visible to the second player (2) for a predetermined period of time,
**characterized in that**
- the contact with the play object (6) is detected during the execution movement and **in that** the blackout goggles are switched to a non-transparent state based on the detected contact with the play object (6), and
- the blackout goggles are switched to a non-transparent state a maximum of 100 ms after the detected contact with the play object (6).

2. Method according to claim 1, **characterized in that**
- the first player (1) and the second player (2) each wear blackout goggles,
- execution movements are detected for the first player (1) and the second player (2) respectively, and
- when an execution movement is detected the blackout goggles of the first player (1) and the blackout goggles of the second player (2) are each switched alternately to a non-transparent state.

3. Method according to claim 1 or 2, **characterized in that**
- two teams, each with several players, are provided, and all of the players of the first team and all of the players of the second team each wear blackout goggles,
- execution movements are detected for all players respectively, and
- upon detection of an execution movement
- the blackout goggles of the players of the first team and the blackout goggles of the players of the second team are switched to a non-transparent state alternately, or
- the blackout goggles of all of the players except the blackout goggles of the player performing the execution movement are switched to a non-transparent state.

4. Method according to any one of the preceding claims, **characterized in that**
- only one side of the blackout goggles is switched to a non-transparent state and/or
- the right and left sides of the goggles are alternately switched to a non-transparent state and/or
- the right and/or left side of the goggles is switched to a transparent state and then back to a non-transparent state at a predetermined frequency, in particular in the form of flashing, and/or
- the blackout goggles are switched to a non-transparent state immediately after, preferably 4 to 9 ms after, particularly preferably 5 ms after, the detected contact with the play object (6).

5. Method according to any one of the preceding claims, **characterized in that**
- the speed of the play object (6) after it has been set on its trajectory, in particular the speed of the play object (6) after contact with an item of hitting equipment, in particular a racket or bat, is determined, and **in that** the duration of the time period in which the blackout goggles are switched to a non-transparent state, in particular automatically, is selected as a function of the determined speed of the play object (6), and/or
- the distance between the first player (1) and the second player (2) is determined and the duration of the time period in which the blackout goggles are switched to a non-transparent state, in particular automatically, is selected as a function of the determined distance, and/or
- the duration of the time period in which the blackout goggles are switched to a non-transparent state is 50 ms to 3 s, in particular 50 ms to 1 s, preferably 50 ms to 300 ms, and/or
- upon detection of the execution movement, the blackout goggles are switched to a non-transparent state for a certain period of time in such a way that the play object (6) is replaced by a virtual image for the second player (2) after the last contact with the play object (6) as part of the execution movement.

6. Method according to any one of the preceding claims, **characterized in that** the blackout goggles are switched back to a transparent state at the latest when an execution movement of the second player (2) is detected,
wherein it is provided in particular that the blackout goggles are switched to a transparent state,
- after the second player (2) has hit the play object (6), preferably after the play object (6) has been hit by an item of hitting equipment, in particular a racket or bat, of the second player (2), and/or
- when the item of hitting equipment, in particular the racket or bat, of the second player crosses a reversal point (U) in the course of the execution movement.

7. Method according to any one of the preceding claims, **characterized in that**
the execution movement and/or contact with the play object (6) is detected by means of an acceleration sensor (5), and/or
- the execution movement and/or contact with the play object (6) is detected by means of a position sensor, in particular a gyroscope sensor (7) and/or a magnetic field sensor,
wherein it may be provided in particular that the measured values of the acceleration sensor (5), the gyroscope sensor (7) and the magnetic field sensor are used jointly for detecting the execution movement and/or the contact with the play object (6).

8. Method according to claim 7, **characterized in that** the execution movement is performed with an item of hitting equipment, in particular a racket, preferably a tennis racket (4) or badminton racket or table tennis bat, or a stick, preferably a hockey stick, and **in that** the blackout goggles are switched to a non-transparent state,
- when the measured acceleration (a) of the head of the hitting equipment, in particular the racket or bat, exceeds a predetermined acceleration threshold value (B), in particular of 120 m/s², and/or
- when the head speed of the hitting equipment, in particular the racket or bat, in particular the calculated head speed, exceeds a predetermined speed threshold value, in particular 20 m/s, and/or
- when the hitting equipment, in particular the racket or bat, reaches a predetermined position over the course of the execution movement, in particular when the hitting equipment, in particular the racket or bat, exceeds a reversal point (U) and/or
- when the vibrations occurring in the course of the execution movement when the hitting equipment, in particular the racket or bat, comes into contact with the play object (6) exceed a predetermined threshold value and/or
- when the derivation after the time of the acceleration (a) of the hitting equipment, in particular the racket or bat, measured at the point of contact (T) between the hitting equipment, in particular the racket or bat, and the play object (6) exceeds a predetermined threshold value (t₀), in particular 2000.

9. Arrangement (100) for performing the method according to any one of claims 1 to 8 or for training the anticipation of the trajectory of a play object (6), in particular a ball, comprising
- at least one sensor
- for arrangement on or in an item of hitting equipment, in particular a racket or bat, or a device for arrangement on the body of a player, in particular a football boot or a cuff, or
- for arrangement in or on a play object (6), in particular a ball, or
at least
- one item of hitting equipment, in particular a racket, preferably a tennis racket (4) or a badminton racket or a table tennis bat, or a bat, preferably an ice hockey stick, with a sensor arranged thereon or therein, or
- a device for arrangement on a player's body, in particular a football boot or a cuff, with a sensor arranged thereon or therein,
and/or
at least one play object (6), in particular a ball, with a sensor arranged therein or thereon,
wherein the sensor is configured to detect contact with the play object (6) during an execution movement, in particular with the hitting equipment, preferably the racket or the bat, particularly preferably by which the play object (6) is moved onto its trajectory,
- at least one pair of blackout goggles, in particular shutter goggles (3) or virtual reality goggles, which are configured to switch to a transparent and non-transparent state when a control signal is present, and
- at least one controller (11) which is configured, in particular according to a method according to any one of claims 1 to 8, to generate a control signal for the blackout goggles upon detection of contact with the play object (6) by the sensor in order to switch the blackout goggles to a non-transparent state a maximum of 100 ms after the detected contact with the play object (6).

10. Arrangement (100) according to claim 9, **characterized in that**
- the arrangement (100) comprises blackout goggles in the form of virtual reality goggles, which are configured to switch to a transparent or non-transparent state when a control signal is present, and
- the at least one controller (11), or, if applicable, a further controller (21), is configured to switch the blackout goggles to a non-transparent state when a corresponding control signal is present, such that the play object (6) is replaced by a virtual image after the last contact with the play object (6) in the course of the execution movement, in particular after the last contact of the play object (6) with an item of hitting equipment, in particular a racket or bat, or a device for arrangement on a player's body or a part of a player's body.

11. Arrangement (100) according to any one of claims 9 or 10, **characterized in that** the sensor is configured as an acceleration sensor (5), wherein it is provided in particular that the acceleration sensor (5) is arranged on the handle of the item of hitting equipment, in particular the racket or bat, preferably in the region of the handle end of item of hitting equipment.

12. Arrangement (100) according to any one of claims 9, 10 or 11, **characterized in that** the sensor is configured as a position sensor, in particular as a magnetic field sensor and/or gyroscope sensor (7), or **in that** a further sensor configured as a position sensor is arranged on the item of hitting equipment, in particular on the racket or bat, wherein it is provided in particular that the position sensor or the further sensor is arranged on the handle of the item of hitting equipment, in particular the racket or bat, preferably in the region of the handle end of the item of hitting equipment.

13. Arrangement (100) according to any one of claims 9 to 12, **characterized in**
the sensor, the controller (11) and a transmitting device (12) are comprised in a transmitting unit (10),
- wherein the transmitting unit (10) is configured for arrangement on an item of hitting equipment, in particular a racket, preferably a tennis racket, a badminton racket or a table tennis bat, or a stick, preferably an ice hockey stick, or on a device for arrangement on the body of a player, in particular a football boot or a cuff, or in or on a play object (6), in particular a ball, and
- wherein the transmitting device (12) is configured to transmit the control signals generated by the controller (11), in particular by radio.

14. Arrangement (100) according to any one of claims 9 to 13, **characterized by**
a receiving unit (20), wherein the receiving unit (20) is configured for arrangement on the blackout goggles, in particular on the shutter goggles (3) or virtual reality goggles, comprising
- a receiving device (22) which is configured to receive control signals transmitted to the blackout goggles, and
- a further controller (21) which is configured to control the blackout goggles, switching them to a transparent or non-transparent state, based on the control signals received by the receiving device (22).

15. Arrangement (100) according to claim 14, **characterized in that** the further controller (21) is configured
- to specify the duration of the time period in which the blackout goggles are switched to a non-transparent state, as a function of the speed of the play object (6) after it has been set onto its trajectory, in particular the speed of the play object (6) after the contact with an item of hitting equipment, in particular a racket or bat, and/or
- to specify the duration of the time period in which the blackout goggles are switched to a non-transparent state, as a function of the distance between the first player (1) and the second player (2).

## Revendications

1. Procédé d'entraînement à l'anticipation de la trajectoire d'un objet de jeu (6), en particulier d'une balle, pour au moins deux joueurs,
- dans lequel un premier joueur (1) envoie, en particulier frappe, l'objet de jeu au moyen d'un mouvement d'exécution à un second joueur (2) à entraîner,
- dans lequel le second joueur (2) porte une lunette d'occultation, en particulier une lunette à obturateur (3) ou lunette de réalité virtuelle qui est formée afin de devenir transparente ou non transparente, en particulier en présence d'un signal de commande,
- dans lequel un mouvement d'exécution du premier joueur (1) est détecté, avec lequel l'objet de jeu (6) est placé sur sa trajectoire,
- dans lequel un capteur est prévu pour l'agencement sur ou dans un appareil de frappe, en particulier une raquette ou un élément de frappe, ou un dispositif pour l'agencement sur le corps d'un joueur, en particulier une chaussure de football ou une manchette, ou pour l'agencement dans ou sur un objet de jeu (6), en particulier une balle,
- dans lequel le capteur est formé afin de détecter le contact avec l'objet de jeu (6) pendant un mouvement d'exécution,
- dans lequel en raison de cette détection, la lunette d'occultation est commutée en mode non transparent au cours du mouvement d'exécution en raison d'un signal de commande établi par un dispositif de commande (11) pour un temps déterminé, dans lequel le dispositif de commande (11) est formé afin d'établir lors de la détection du contact avec l'objet de jeu (6) par le capteur un signal de commande pour la lunette d'occultation,
- de sorte qu'au moins une partie du mouvement d'exécution soit visible avant le contact avec l'objet de jeu (6) pour le second joueur (2) et
- de sorte qu'après le dernier contact avec l'objet de jeu (6) dans le cadre du mouvement d'exécution, cet objet de jeu (6) pour le second joueur (2) ne soit pas visible pendant une période prédéfinie,
**caractérisé en ce que**
- le contact avec l'objet de jeu (6) est détecté pendant le mouvement d'exécution et **en ce que** la lunette d'occultation est commutée en mode non transparent respectivement en raison du contact détecté avec l'objet de jeu (6) et
- la lunette d'occultation est commutée en mode non transparent au maximum 100 ms après le contact détecté avec l'objet de jeu (6).

2. Procédé selon la revendication 1, **caractérisé en ce que**
- le premier joueur (1) et le second joueur (2) portent respectivement une lunette d'occultation,
- pour le premier joueur (1) et pour le second joueur (2) respectivement des mouvements d'exécution sont détectés et
- lors de la détection d'un mouvement d'exécution, la lunette d'occultation du premier joueur (1) et la lunette d'occultation du second joueur (2) sont commutées en mode non transparent respectivement alternativement.

3. Procédé selon la revendication 1 ou 2, **caractérisé en ce que**
- deux équipes avec respectivement plusieurs joueurs sont prévues et tous les joueurs de la première équipe et tous les joueurs de la seconde équipe portent respectivement une lunette d'occultation,
- pour tous les joueurs, respectivement des mouvements d'exécution sont détectés et
- lors de la détection d'un mouvement d'exécution
- les lunettes d'occultation des joueurs de la première équipe et les lunettes d'occultation des joueurs de la seconde équipe sont commutées en mode non transparent respectivement alternativement ou
- les lunettes d'occultation de tous les joueurs sont commutés en mode non transparent en dehors de la lunette d'occultation du joueur qui réalise le mouvement d'exécution.

4. Procédé selon l'une quelconque des revendications précédentes, **caractérisé en ce que**
- seul un côté de la lunette d'occultation est commuté en mode non transparent et/ou
- le côté droit et le côté gauche de la lunette sont commutés en mode non transparent alternativement et/ou
- le côté droit et/ou le côté gauche de la lunette avec une fréquence prédéfinie, en particulier sous la forme de clignotements, est commuté en mode transparent et de nouveau non transparent et/ou
- la lunette d'occultation est commutée en mode non transparent directement après, de préférence 4 à 9 ms après, de manière particulièrement préférée 5 ms après le contact détecté avec l'objet de jeu (6).

5. Procédé selon l'une quelconque des revendications précédentes, **caractérisé en ce que**
- la vitesse de l'objet de jeu (6) après qu'il a été placé sur sa trajectoire, en particulier la vitesse de l'objet de jeu (6) est déterminée après le contact avec un appareil de frappe, en particulier une raquette ou un élément de frappe, et **en ce que** la durée de la période, dans laquelle la lunette d'occultation est commutée en mode non transparent, en particulier est choisie automatiquement, en fonction de la vitesse déterminée de l'objet de jeu (6), et/ou
- la distance entre le premier joueur (1) et le second joueur (2) est déterminée et **en ce que** la durée de la période, dans laquelle la lunette d'occultation est commutée en mode non transparent, est choisie en particulier automatiquement, en fonction de la distance déterminée, et/ou
- la durée de la période, dans laquelle la lunette d'occultation est commutée en mode non transparent, s'élève de 50 ms à 3 s, en particulier de 50 ms à 1 s, de préférence de 50 ms à 300 ms, et/ou
- **en ce que** lors de la détection du mouvement d'exécution, la lunette d'occultation est commutée en mode non transparent pendant un temps déterminé de telle manière que l'objet de jeu (6) soit remplacé après le dernier contact avec l'objet de jeu (6) dans le cadre du mouvement d'exécution pour le second joueur (2) par une image virtuelle.

6. Procédé selon l'une quelconque des revendications précédentes, **caractérisé en ce que** la lunette d'occultation est commutée en mode transparent à nouveau au plus tard lorsqu'un mouvement d'exécution du second joueur (2) est détecté,
dans lequel il est en particulier prévu que la lunette d'occultation soit commutée en mode non transparent,
- après que le second joueur (2) a touché l'objet de jeu (6), de préférence après que l'objet de jeu (6) a été touché par un appareil de frappe, en particulier une raquette ou un élément de frappe, du second joueur (2), et/ou
- lorsque l'appareil de frappe, en particulier la raquette ou l'élément de frappe, du second joueur au cours du mouvement d'exécution dépasse un point d'inversion (U).

7. Procédé selon l'une quelconque des revendications précédentes, **caractérisé en ce que**
la détection du mouvement d'exécution et/ou du contact avec l'objet de jeu (6) est entreprise à l'aide d'un capteur d'accélération (5), et/ou
- la détection du mouvement d'exécution et/ou du contact avec l'objet de jeu (6) est entreprise à l'aide d'un capteur de position, en particulier d'un capteur de gyroscope (7) et/ou d'un capteur de champ magnétique,
dans lequel il peut être en particulier prévu que les valeurs de mesure du capteur d'accélération (5), du capteur de gyroscope (7) et du capteur de champ magnétique soient utilisées ensemble pour la détection du mouvement d'exécution et/ou du contact avec l'objet de jeu (6).

8. Procédé selon la revendication 7, **caractérisé en ce que** le mouvement d'exécution est réalisé avec un appareil de frappe, en particulier une raquette, de préférence une raquette de tennis (4) ou raquette de badminton ou raquette de tennis de table, ou un élément de frappe, de préférence une crosse de hockey et **en ce que** la lunette d'occultation est commutée en mode non transparent,
- lorsque l'accélération (a) mesurée de la tête de frappe de l'appareil de frappe, en particulier de la raquette ou de l'élément de frappe, dépasse une valeur seuil d'accélération (B) prédéfinie, en particulier de 120 m/s², et/ou
- lorsque la vitesse de la tête de frappe de l'appareil de frappe, en particulier calculée, en particulier de la raquette ou de l'élément de frappe, dépasse une valeur seuil de vitesse prédéfinie, en particulier de 20 m/s, et/ou
- lorsque l'appareil de frappe, en particulier la raquette ou l'élément de frappe, atteint au cours du mouvement d'exécution une position prédéfinie, en particulier lorsque l'appareil de frappe, en particulier la raquette ou l'élément de frappe, dépasse un point d'inversion (U) et/ou
- lorsque les vibrations survenant au cours du mouvement d'exécution lors du contact de l'appareil de frappe, en particulier de la raquette ou de l'élément de frappe, avec l'objet de jeu (6) dépassent une valeur seuil prédéfinie et/ou
- lorsque la dérivation après le temps de l'accélération (a) mesurée lors du contact de l'appareil de frappe, en particulier de la raquette ou de l'élément de frappe, avec l'objet de jeu (6) au point de rencontre (T) de l'appareil de frappe, en particulier de la raquette ou de l'élément de frappe, dépasse une valeur seuil prédéfinie (t₀), en particulier de 2 000.

9. Ensemble (100) de mise en œuvre du procédé selon l'une quelconque des revendications 1 à 8 ou d'entraînement à l'anticipation de la trajectoire d'un objet de jeu (6), en particulier d'une balle, comprenant
- au moins un capteur
- pour l'agencement sur ou dans un appareil de frappe, en particulier une raquette ou un élément de frappe, ou un dispositif pour l'agencement sur le corps d'un joueur, en particulier une chaussure de football ou une manchette, ou
- pour l'agencement dans ou sur un objet de jeu (6), en particulier une balle ou
au moins
- un appareil de frappe, en particulier une raquette, de préférence une raquette de tennis (4) ou une raquette de badminton ou une raquette de tennis de table ou un élément de frappe, de préférence une crosse de hockey, avec un capteur agencé dessus ou dedans ou
- un dispositif pour l'agencement sur le corps d'un joueur, en particulier une chaussure de football ou une manchette avec un capteur agencé dessus ou dedans,
et/ou
au moins un objet de jeu (6), en particulier une balle, avec un capteur agencé dedans ou dessus,
dans lequel le capteur est formé afin de détecter le contact avec l'objet de jeu (6) pendant un mouvement d'exécution, en particulier avec l'appareil de frappe, de préférence avec la raquette ou l'élément de frappe, de manière particulièrement préférée avec laquelle l'objet de jeu (6) est placé sur sa trajectoire,
- au moins une lunette d'occultation, en particulier une lunette à obturateur (3) ou lunette de réalité virtuelle qui est formée afin de commuter en mode transparent ou non transparent en particulier en présence d'un signal de commande, et
- au moins un dispositif de commande (11) qui est formé afin d'établir en particulier selon un procédé selon l'une quelconque des revendications 1 à 8, lors de la détection du contact avec l'objet de jeu (6) par le capteur un signal de commande pour la lunette d'occultation afin de commuter en mode non transparent la lunette d'occultation au maximum 100 ms après le contact détecté avec l'objet de jeu (6).

10. Ensemble (100) selon la revendication 9, **caractérisé en ce que**
- l'ensemble (100) comprend une lunette d'occultation sous la forme d'une lunette de réalité virtuelle qui est formée afin de commuter en mode transparent ou non transparent en présence d'un signal de commande, et
- le au moins un dispositif de commande (11) ou éventuellement un autre dispositif de commande (21) est formé afin de commuter en présence d'un signal de commande correspondant la lunette d'occultation en mode non transparent de telle manière que l'objet de jeu (6) soit remplacé après le dernier contact avec l'objet de jeu (6) dans le cadre du mouvement d'exécution par une image virtuelle, en particulier après le dernier contact de l'objet de jeu (6) avec un appareil de frappe, en particulier une raquette ou un élément de frappe, ou un dispositif pour l'agencement sur le corps d'un joueur ou d'une partie de corps d'un joueur.

11. Ensemble (100) selon l'une quelconque des revendications 9 ou 10, **caractérisé en ce que** le capteur est formé comme capteur d'accélération (5), dans lequel il est en particulier prévu que le capteur d'accélération (5) soit agencé sur le manche de l'appareil de frappe, en particulier de la raquette ou de l'élément de frappe, de préférence dans la zone de l'extrémité de préhension de l'appareil de frappe.

12. Ensemble (100) selon l'une quelconque des revendications 9, 10 ou 11, **caractérisé en ce que** le capteur est formé comme capteur de position, en particulier comme capteur de champ magnétique et/ou capteur de gyroscope (7) ou **en ce qu'**un autre capteur formé comme capteur de position est agencé sur l'appareil de frappe, en particulier sur la raquette ou sur l'élément de frappe, dans lequel il est en particulier prévu que le capteur de position ou l'autre capteur soit agencé sur le manche de l'appareil de frappe, en particulier de la raquette ou de l'élément de frappe, de préférence dans la zone de l'extrémité de préhension de l'appareil de frappe.

13. Ensemble (100) selon l'une quelconque des revendications 9 à 12, **caractérisé en ce que**
le capteur, le dispositif de commande (11) et un dispositif d'émission (12) sont compris dans une unité d'émission (10),
- dans lequel l'unité d'émission (10) est formée pour l'agencement sur un appareil de frappe, en particulier une raquette, de préférence une raquette de tennis, une raquette de badminton ou une raquette de tennis de table ou un élément de frappe, de préférence une crosse de hockey, ou sur un dispositif pour l'agencement sur le corps d'un joueur, en particulier une chaussure de football ou une manchette, ou dans ou sur un objet de jeu (6), en particulier une balle, et
- dans lequel le dispositif d'émission (12) est formé afin de transmettre les signaux de commande établis par le dispositif de commande (11), en particulier par radio.

14. Ensemble (100) selon l'une quelconque des revendications 9 à 13, **caractérisé par**
une unité de réception (20), dans lequel l'unité de réception (20) est formée pour l'agencement sur la lunette d'occultation, en particulier sur la lunette à obturateur (3) ou lunette de réalité virtuelle comprenant
- un dispositif de réception (22) qui est formé afin de recevoir des signaux de commande transmis à la lunette d'occultation, et
- un autre dispositif de commande (21) qui est formé afin de commander sur la base des signaux de commande reçus par le dispositif de réception (22) la lunette d'occultation, de la commuter en mode transparent ou non transparent.

15. Ensemble (100) selon la revendication 14, **caractérisé en ce que** l'autre dispositif de commande (21) est formé afin de
- prédéfinir la durée de la période, dans laquelle la lunette d'occultation est commutée en mode non transparent, en fonction de la vitesse de l'objet de jeu (6) après qu'il a été placé sur sa trajectoire, en particulier la vitesse de l'objet de jeu (6) après le contact avec un appareil de frappe, en particulier une raquette ou un élément de frappe, et/ou
- prédéfinir la durée de la période, dans laquelle la lunette d'occultation est commutée en mode non transparent, en fonction de la distance entre le premier joueur (1) et le second joueur (2).
